(19) **Europäisches Patentamt / European Patent Office / Office européen des brevets**

(11) **EP 3 911 689 B1**

(12) **FASCICULE DE BREVET EUROPEEN**

(45) Date de publication et mention
de la délivrance du brevet:
**09.11.2022 Bulletin 2022/45**

(21) Numéro de dépôt: **20700502.6**

(22) Date de dépôt: **15.01.2020**

(51) Classification Internationale des Brevets (IPC):
**C08G 18/42** (2006.01)    **C08G 18/76** (2006.01)
**C08L 75/06** (2006.01)    **B63B 35/00** (2020.01)
**C08J 5/08** (2006.01)    **C08J 9/08** (2006.01)
**F17C 3/04** (2006.01)

(52) Classification Coopérative des Brevets (CPC):
**C08G 18/7664; B63B 25/16; C08G 18/4208;**
**C08J 9/0038; C08J 9/0085; C08J 9/0095;**
**C08L 75/06;** C08G 2110/005; C08G 2330/00;
C08J 9/141; C08J 2203/14; C08J 2375/04;
F17C 2203/0333; F17C 2203/0358

(86) Numéro de dépôt international:
**PCT/EP2020/050922**

(87) Numéro de publication internationale:
**WO 2020/148339 (23.07.2020 Gazette 2020/30)**

(54) **PROCEDE DE PREPARATION D'UN BLOC DE MOUSSE POLYURETHANE/POLYISOCYANURATE D'UN MASSIF D'ISOLATION THERMIQUE D'UNE CUVE**

VERFAHREN ZUR HERSTELLUNG EINES BLOCKS AUS POLYURETHAN-/POLYISOCYANURATSCHAUM EINER PLATTE ZUR WÄRMEDÄMMUNG EINES TANKS

PROCESS FOR PREPARING A BLOCK OF POLYURETHANE/POLYISOCYANURATE FOAM OF A SLAB FOR HEAT-INSULATING A TANK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.01.2019 FR 1900395**

(43) Date de publication de la demande:
**24.11.2021 Bulletin 2021/47**

(73) Titulaire: **Gaztransport et Technigaz**
**78470 Saint-Rémy-lès-Chevreuse (FR)**

(72) Inventeurs:
• **DE COMBARIEU, Guillaume**
**78470 SAINT REMY LES CHEVREUSE (FR)**
• **KITZMANN, Patrick**
**78470 SAINT REMY LES CHEVREUSE (FR)**
• **DEWOLF, Laetitia**
**78470 SAINT REMY LES CHEVREUSE (FR)**

(74) Mandataire: **Loyer & Abello**
**9, rue Anatole de la Forge**
**75017 Paris (FR)**

(56) Documents cités:
FR-A1- 2 882 756     FR-B1- 2 882 756
KR-A- 20000 010 021

**Description**

**Domaine technique**

L'invention a pour objet un procédé de préparation de blocs de mousses de polyuréthane (PUR) et/ou polyisocyanurate (PIR) fibrées (contenant des fibres longues à continues) à partir d'au moins un polyisocyanate et d'au moins un polyol, lesdits blocs de mousses étant utilisés au sein d'une cuve, intégrée dans une structure porteuse ou auto-porteuse de type B ou C, servant à accueillir des fluides extrêmement froids, dits cryogéniques, tels que notamment du Gaz Naturel Liquéfié (GNL) ou du Gaz de Pétrole Liquéfié (GPL).

La présente invention concerne également les blocs de mousses de PUR et/ou PIR fibrées qui doivent présenter, compte tenu de leurs applications spécifiques, des caractéristiques mécaniques et thermiques très particulières, tout en étant le plus économique possible à produire.

La présente invention concerne enfin plus particulièrement les cuves étanches et thermiquement isolantes utilisant de telles mousses directement obtenues par ce procédé de préparation ainsi que les navires équipés de telles cuves.

**Technique antérieure**

Arrière-plan technologique

La mousse de polyuréthane PUR est un isolant alvéolaire, composé de fines cellules emmagasinant un gaz pouvant être à faible conductivité thermique. La mousse PUR est utilisée dans de très nombreuses applications telles que l'industrie automobile en tant que mousse PUR souple ou dans l'isolation thermique en tant que mousse PUR rigide. La formation des mousses de type polyuréthane est bien connue de l'homme du métier. Sa formation implique une réaction multi-composants entre un polyol (composé porteur d'au moins deux groupements hydroxy), un polyisocyanate (composé porteur d'au moins deux fonctions isocyanate -NCO) et un agent d'expansion, également désigné par l'expression « agent gonflant ». Cette réaction de condensation est notamment catalysée par des composés à caractères basiques et/ou nucléophiles tels que les amines tertiaires ou les complexes de coordination métal-carboxylate tels que les sels d'étain ou de bismuth. Les polyols couramment utilisés dans la fabrication des mousses PUR sont des polyols polyéther ou des polyols polyester. Ainsi, un grand nombre de composés sont nécessaires à la formation de mousse PUR.

Les mousses de polyisocyanurate (PIR) et de polyuréthane/polyisocyanurate (PUR-PIR) sont également utilisées dans le bâtiment (la construction/rénovation) et présentent l'avantage d'apporter de meilleures propriétés anti-feu ainsi qu'une résistance à la compression plus élevée que les PUR. Le procédé de formation de ces mousses est similaire au procédé de formation des mousses PUR. En effet, l'obtention des mousses PUR, PIR et PUR-PIR dépend du ratio isocyanate/polyol.

On connaît dans l'état de la technique les documents FR 2882755 et KR 20000010021 qui décrivent des mousses PUR ou PIR fibrées, et leurs préparations. Dans ces deux documents, les mousses PUR ou PIR présentent une densité élevée.

L'obtention de mousses PUR, PIR et PUR-PIR est bien connue de l'homme du métier, néanmoins l'ajout de fibres implique des problèmes techniques spécifiques, en particulier si l'on souhaite obtenir une mousse PUR, PIR ou PUR-PIR fibrée dans laquelle les fibres longues à continues, soit d'au moins cinq centimètres, sont dispersées de façon homogène dans le volume de mousse.

En particulier, lorsque l'on souhaite obtenir des mousses PUR, PIR et PUR-PIR fibrées de basse densité, c'est-à-dire présentant une densité inférieure à 50 kg.m-3, l'incorporation de fibres est très difficile et conduit généralement à une mousse dans laquelle la fibre n'est pas répartie de manière homogène. En effet, pour obtenir de telles mousses fibrées de faible densité, il est nécessaire de réaliser de manière coïncidente une imprégnation rapide et homogène des fibres tout en utilisant une proportion en agent gonflant importante. Ceci a pour conséquence que l'agent gonflant n'est plus totalement solubilisé dans le polyol et forme alors une émulsion d'agent gonflant dans le polyol saturé, qu'il est nécessaire de stabiliser et mélanger efficacement avec l'isocyanate. Dans ce cadre d'une coulée (sous l'action de la simple gravitation) du mélange pré-polymère sur les fibres, une solution à ce problème consiste à augmenter la quantité de gaz de nucléation lors du mélange polyol/isocyanate, ce qui augmente la viscosité et rend difficile voire impossible d'obtenir une bonne pénétration de la mousse polyuréthane/polyisocyanurate dans les fibres et ainsi un bloc de mousse fibrée homogène, les parties supérieures du bloc étant exemptes, ou quasi-exemptes, de fibres.

Ainsi, l'augmentation d'agent gonflant conduit à une mousse de structure ou de densité (en fibres) non homogène, la mousse fibrée ainsi obtenue étant thermiquement non performante et présentant de mauvaises qualités mécaniques.

Par ailleurs, l'augmentation de la quantité d'agent gonflant nécessite d'utiliser des composants chimiques plus réactifs afin de compenser le phénomène endothermique lié à l'importante vaporisation de l'agent gonflant physique, ce qui réduit le temps de crème et ne permet pas une bonne imprégnation des fibres en vue de leur expansion contrôlée.

Un problème complémentaire réside dans la production d'un bloc de mousse économique, c'est-à-dire dans lequel il n'est pas nécessaire de procéder à des découpes afin d'obtenir un bloc de mousse fibrée homogène, les pertes matières liées à ces découpes représentant classiquement de l'ordre de 15%, voire plus de 20%, ce qui n'est absolument pas satisfaisant dans un procédé industriel.

Ainsi, il n'existe pas, à l'heure actuelle, de procédé de préparation d'un bloc de mousse de polyuréthane et/ou polyisocyanurate fibrée de basse densité (inférieure à 50 kg.m-3) permettant d'obtenir un bloc présentant de très bonnes propriétés mécaniques, du fait en particulier d'une hétérogénéité du taux de fibres dans le bloc.

## Résumé

C'est dans ce contexte que la demanderesse est parvenue à mettre au point un procédé de production de mousses de polyuréthane (PUR) et/ou polyisocyanurate (PIR) contenant des fibres, longues à continues, en quantité significative permettant à la fois l'obtention d'une mousse fibrée, légère et facile à manipuler, présentant d'excellentes propriétés mécaniques, tout en conservant, voire en améliorant ses excellentes performances d'isolant thermique. De façon avantageuse, il est également possible, selon un mode d'exécution préféré, de diminuer très significativement le coût de production d'une telle mousse fibrée du fait d'une parfaite homogénéité de cette dernière (la perte de matière du bloc de mousse est ainsi minime, voire négligeable).

Le terme « bloc » selon l'invention est un terme non limitatif. Le « bloc » peut avoir n'importe quelle forme et il n'est pas obligatoire que celui-ci soit découpé.

La présente invention entend ainsi remédier aux lacunes de l'état de la technique en proposant une solution particulièrement efficace, simple à mettre en œuvre, pour obtenir industriellement une mousse de PUR/PIR fibrée basse densité dont les propriétés mécaniques sont optimales.

Il a été découvert par la demanderesse, après diverses études et analyses, une préparation d'un bloc de mousse de polyuréthane (PUR) et/ou polyisocyanurate (PIR) fibrée, avec des fibres longues à continues, apte à résoudre en premier lieu les problèmes techniques des préparations actuelles, au regard des objectifs spécifiques liés à l'application finale d'un tel bloc de mousse basse densité.

Ainsi, la présente invention concerne un procédé de préparation d'un bloc de mousse de polyuréthane/polyisocyanurate fibrée d'un massif d'isolation thermique d'une cuve étanche et thermiquement isolante, le bloc de mousse de polyuréthane/polyisocyanurate fibrée étant composé de cellules emmagasinant un gaz, avantageusement à faible conductivité thermique, et présentant une densité inférieure à 50 kg.m-3 avec un taux de fibres Tf représentant au moins 4% en masse du bloc de mousse fibrée, le procédé de préparation comportant les étapes suivantes :

a) une étape de mélange de composants chimiques nécessaires à l'obtention d'une mousse de polyuréthane/polyisocyanurate, lesdits composants comportant des réactifs pour l'obtention de polyuréthane/polyisocyanurate, éventuellement au moins un catalyseur de réaction, éventuellement au moins un émulsifiant, et au moins un agent gonflant,

b) une étape d'imprégnation, par écoulement gravitationnel du susdit mélange de composants chimiques, d'une pluralité de renforts de fibres, lesdites fibres étant longues à continues, disposés en couches superposées, dans lesquels les renforts de fibres s'étendent essentiellement suivant une direction perpendiculaire à la direction dudit écoulement gravitationnel, ces renforts de fibres présentant une perméabilité $K_c$ au susdit mélange de composants chimiques, exprimée en $m^2$, égale à :

$$K_c = (r_f^2 \times p^3) / (k \times \tau^2 \times 4 \times V_f^2) \,,$$

avec

$r_f$ = rayon des fibres, exprimé en mètre (m)
p = porosité des fibres (sans dimension), valeur comprise entre 0 et 1
k = facteur de forme (sans dimension), fonction de la nature des fibres
$\tau$ = tortuosité (sans dimension), fonction de la disposition des fibres
$V_f$ = fraction volumique des fibres (proportion de fibres dans un volume du renfort), valeur comprise entre 0 et 1

c) une étape de formation et d'expansion de la mousse de polyuréthane/polyisocyanurate fibrée.

le procédé selon l'invention se caractérisant en ce que le susdit mélange de composants chimiques présentent une viscosité dynamique $\eta$, lors de l'étape b) d'imprégnation, de telle sorte qu'un temps d'imprégnation des fibres $t_i$ est

inférieur au temps de crème $t_c$ de la mousse de polyuréthane/polyisocyanurate, le temps d'imprégnation des fibres $t_i$ étant égal à :

$$t_i = (\eta \times e_m^2) / (K_c \times \Delta P) ,$$

$$\Delta P = (M_{sm} \times g_T \times k_p) ,$$

avec

$\eta$ = la viscosité dynamique, exprimée en Pascal seconde (Pa.s),
$e_m$ = somme des épaisseurs moyennes des renforts de fibres, exprimée en mètre (m),
$\Delta P$ = gradient ou différentiel de pression hydraulique, exprimé en Pascal (Pa)
$M_{sm}$ = masse surfacique du susdit mélange de composants chimiques, exprimée en masse par unité de surface (kg.m$^{-2}$)
$g_T$ = force de gravitation terrestre, ici considérée égale à 9,8 N.kg$^{-1}$
$k_p$ = facteur de moyenne de pression hydraulique, constante égale à 0,5.

On entend par l'expression « cellules emmagasinant un gaz » le fait que la mousse de polyuréthane/polyisocyanurate présente des cellules fermées enfermant un gaz, de préférence présentant une faible conductivité thermique, provenant d'un gaz injecté lors d'une étape de nucléation du mélange réactionnel ou provenant, directement ou indirectement, de l'agent d'expansion chimique ou physique.

On entend par l'expression « renfort de fibres » le fait que les fibres peuvent se présenter sous deux formes distinctes :

- soit sous la forme d'au moins un tissu de fibres, dans lequel les fibres sont parfaitement alignées selon au moins une direction, autrement dit les fibres présentent au moins une direction privilégiée de fibres. L'expression de « tissu de fibres » renvoie per se à une définition technique claire et connue pour l'homme du métier,
- soit sous la forme d'au moins un mat de fibres, dans lequel les fibres ne présentent pas d'orientation définie, autrement dit ces fibres sont orientées de façon isotrope essentiellement suivant le plan principal de la couche du mat. A nouveau, l'expression de « mat de fibres » renvoie per se à une définition technique claire et connue pour l'homme du métier.

Selon un mode d'exécution, on entend par l'expression un « gaz (avantageusement) à faible conductivité thermique » le gaz provenant de l'agent gonflant, soit par réaction chimique de celui-ci lorsque cet agent est dit « chimique », classiquement du dioxyde de carbone (CO2) lorsque l'agent gonflant chimique consiste en de l'eau, soit par un agent gonflant physique tels que par exemple le diazote (N2), le dioxygène (O2), le dioxyde de carbone, les hydrocarbures, les chlorofluorocarbures, les hydrochlorocarbures, les hydrofluorocarbures, les hydrochlorofluorocarbures, et leurs mélanges. Les agents gonflants physiques tels que l'azote moléculaire N2, le dioxygène O2 ou le CO2 se trouvent sous forme de gaz. Ces gaz sont dispersés dans la masse liquide de copolymère par exemple sous haute pression à l'aide d'un mélangeur statique. En dépressurisant le système, la nucléation et la croissance des bulles génèrent une structure cellulaire.

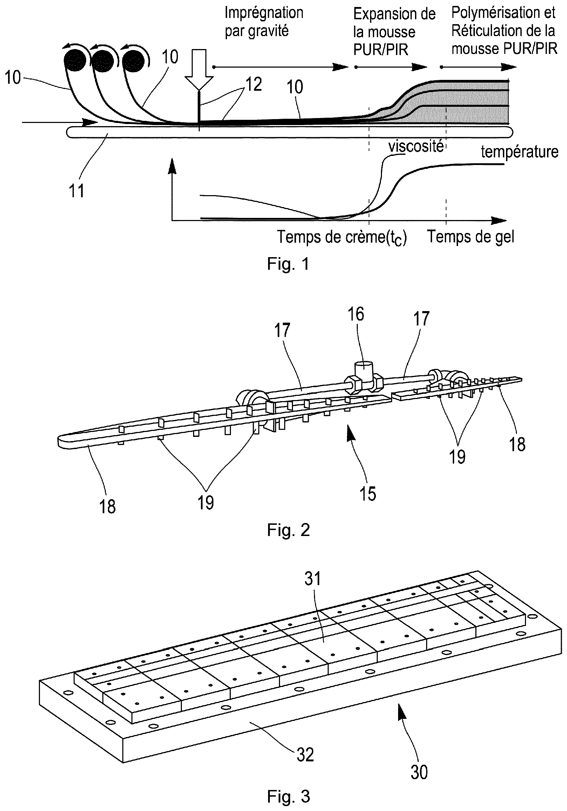

On entend par l'expression « les renforts de fibres s'étendent essentiellement suivant une direction perpendiculaire à la direction de l'écoulement gravitationnel du mélange de composants chimiques » le fait que ces renforts de fibres se présentent sous la forme d'une couche de faible épaisseur s'étalant, lors de l'étape b) d'imprégnation, suivant un plan perpendiculaire à la direction d'écoulement dudit mélange de composants. Ainsi, comme on peut le voir sur la figure 1, la pluralité de renforts de fibres, présentant une largeur L et disposés en couches superposées, est entraîné dans une direction longitudinale l tandis que le mélange de composants chimiques est déposé sur les renforts de fibres depuis un distributeur autorisant/permettant l'écoulement gravitationnel du mélange de composants chimiques. Autrement dit, le mélange de composants chimiques, sortant éventuellement sous pression du distributeur, tombe sous l'effet au moins de son propre poids sur les mats de fibres empilés, imprégnant ainsi ces renforts de fibres depuis la couche supérieure jusqu'à la couche inférieure.

On entend par le terme « $r_f$ » se rapportant au rayon des fibres, exprimé en mètre (m), le rayon d'une fibre dans le renfort ou plus classiquement le rayon, ou le quasi-rayon, considéré par l'agglomération d'un ensemble de fibres formant localement une fibre agglomérée présentant un rayon moyen, équivalent alors à $r_f$. Cette donnée relative à ce rayon des fibres $r_f$ est définie par le renfort de fibres, en tant qu'une de ses caractéristiques physico-chimiques essentielles et peut éventuellement être caractérisée par une masse linéique (g/km) ou TEX, mesure du titrage (masse linéique) des fils et filés, bien connue de l'homme du métier, données à partir desquelles on obtient le rayon des fibres $r_f$, éventuellement le rayon moyen $r_f$ lorsqu'il s'agit d'une agglomération de fibres.

En d'autres termes, le rayon des fibres rf est égal au rayon de la fibre dans le renfort si la fibre ne fait pas partie de la fibre agglomérée ou au rayon de la fibre agglomérée si plusieurs fibres sont agglomérées.

On entend par l'expression « les fibres étant longues à continues » (ou « fibres longues à continues ») le fait que les fibres, ou le cas échéant une fibre agglomérée (fibres collées ou fixées les unes autres), présentent toutes - soit au moins 90% des fibres, considérées seule ou agglomérées formant l'équivalent d'une unique fibre, en masse totale desdites fibres - une longueur d'au moins cinq (5) centimètres (cm).

De la même manière, la porosité des fibres p ainsi que la tortuosité $\tau$ sont des grandeurs caractéristiques du renfort de fibres considéré, c'est-à-dire que les valeurs de ces grandeurs sont connues comme définissant le renfort de fibres. Ainsi, ces valeurs sont classiquement données comme définissant le renfort de fibres mais elles peuvent bien entendu être mesurées par des techniques classiques, telles que la mesure d'un écoulement stationnaire non turbulent, unidirectionnel ou radial, d'un fluide calibré (par exemple : air, huile silicone) au travers d'un empilement défini de renfort de verre, en appliquant la loi de Darcy.

Pour mesurer la porosité des fibres utilisées dans le cadre de la présente invention, que ces dernières se présentent sous forme de tissu de fibres ou de mat de fibres, on pourra par exemple utiliser un pied à coulisse, idéalement numérique, mesurant l'épaisseur d'un échantillon d'empilement - par exemple une dizaine - de tissus ou de mats de fibres utilisés. Avec les dimensions en largeur/longueur de l'échantillon de tissu/mat de fibres et connaissant la densité (du verre, du basalte, du carbone, du chanvre etc...) des fibres considérées, on effectue la mesure de l'épaisseur (ou hauteur) à plusieurs endroits/emplacements de l'empilement de tissu de fibres ou mat de fibres, constituant les extremums d'épaisseur, de manière à déterminer l'épaisseur moyenne du renfort (tissu ou mat) de fibres considéré et ainsi connaitre le volume occupé par les fibres dans ce tissu de fibres ou mat de fibres (la masse volumique de l'air étant considérée ici comme nulle). Comme énoncé précédemment, cette porosité est sans dimension, comprise entre 0 et 1, c'est-à-dire qu'elle représente le pourcentage ou la fraction de vide dans un renfort (tissu ou mat) de fibres considéré, autrement dit la « porosité des fibres ».

On note que la densité des fibres est une propriété connue en tant que telle ou accessible à l'homme du métier. De manière générale, il est bien entendu que l'objet de la présente invention utilise des matériaux/produits accessibles ou disponibles sur le marché de sorte que leurs propriétés, notamment celles relatives à leurs densités ou viscosités (dynamique), sont disponibles dans les spécifications relatives aux matériaux/produits considérés.

La tortuosité $_\tau$ d'un renfort de fibres correspond à la moyenne de tortuosité des fibres qui constituent le renfort de fibres, la tortuosité d'une fibre étant égal au ratio entre Le/L avec :

- Le : la longueur de trajet effective, c'est-à-dire la longueur de la courbe formée par la fibre ;
- L : la distance superficielle dans laquelle la fibre se déforme, c'est-à-dire la distance entre les deux extrémités de la fibre.

La méthode de détermination de la tortuosité d'une fibre ou d'une agglomération de fibres (désignée précédemment en tant que « fibre agglomérée ») est décrite notamment dans la thèse R. Pomeroy, (2009) « Permeability characterisation of continuous filament mats for resin transfer moulding », disponible notamment dans la base de données Sémantic Scholar.

Également, le facteur de forme k est une constante définie par la nature du renfort de fibres considéré. Ainsi, comme on l'a vu précédemment, dans le cadre de la présente invention, le renfort de fibres peut consister en un tissu de fibres ou en un mat de fibres, une valeur de ce facteur de forme k étant donnée dans chacun de ces deux cas :

k = 1 pour un tissu de fibres, par exemple des fibres de carbone,
k = 6 pour un mat de fibres, par exemple un mat de fibres continues de verre.

Concernant la fraction $V_f$, elle représente la fraction volumique des fibres (proportion volumique du matériau constitutif des fibres dans le volume apparent du renfort), soit une valeur comprise entre 0 et 1, autrement dit un pourcentage de fibres (en volume) dans le renfort (dont les bords/extrémités définissent un volume fermé). Cette valeur $V_f$ est connue comme une caractéristique intrinsèque du renfort de fibres considéré et la valeur $V_f$ peut être mesurée par exemple par la mesure de la masse surfacique ($g/m^2$), bien connue de l'homme du métier, à partir de laquelle on peut obtenir la fraction volumique des fibres $V_f$. On pourra utiliser éventuellement la norme internationale ISO 14127:2008 pour mesurer cette fraction volumique des fibres $V_f$.

Le terme $e_m$ représente la somme des épaisseurs moyennes des renforts de fibres, exprimé en mètre (m), autrement dit on mesure l'épaisseur moyenne de chaque renfort de fibres et on obtient la valeur de ce terme $e_m$ en additionnant les épaisseurs moyennes pour chacun des renforts de fibres. On entend par l'expression « épaisseur moyenne » la moyenne des distances entre deux extremums locaux du renfort, soit les distances entre deux points du renfort les plus éloignés, situés sensiblement en vis-à-vis par rapport à un plan d'extension du renfort de fibres, la mesure de cette distance entre ces deux points étant répétée en une pluralité de zones du renfort afin de déterminer une épaisseur moyenne du renfort de fibres la plus précise possible. En d'autres termes, l'épaisseur moyenne d'un renfort de fibres correspond à la moyenne des distances entre une pluralité de paires d'extremums locaux dudit renfort de fibres espacés l'un de l'autre selon une direction d'épaisseur dudit renfort de fibres.

Le terme ΔP exprime le gradient de pression hydraulique, exprimé en Pascal (Pa), soit un différentiel de pression s'exerçant entre la ou les couche(s) supérieure(s) de renfort(s) de fibres, imprégnée(s) par le mélange de composants chimiques, et la ou les couche(s) inférieure(s) de renfort(s) de fibres qui ne sont pas encore imprégnées par le mélange de composants chimiques, et donc à une pression sensiblement égale à la pression atmosphérique. Comme on le voit avec la troisième équation, ce terme ΔP est fonction de la masse surfacique $M_{sm}$ du susdit mélange de composants chimiques, soit une quantité de matière formée par ledit mélange par unité de surface (ici exprimée en kg.m-2).

Ainsi, tous les termes et leurs valeurs respectives utilisés pour définir le procédé de préparation selon l'invention, plus particulièrement le temps d'imprégnation ti, sont des données connues per se ou sont déterminables/mesurables grâce à des techniques connues de l'homme du métier.

On entend par l'expression « temps de crème » le temps nécessaire, à compter du mélange des composants chimiques, pour que ces derniers commencent les réactions de polymérisation et que le mélange de composants démarre l'étape c) d'expansion et de réticulation (= formation de la mousse PUR/PIR fibrée). Ce temps de crème est une donnée bien connue de l'homme du métier. En d'autres termes, le temps de crème est le temps écoulé jusqu'à ce que le mélange blanchisse sous l'action de la nucléation des bulles (cellules emmagasinant un gaz) et de l'expansion de la mousse après mélange des composants chimiques à température ambiante. Le temps de crème peut être déterminé visuellement ou à l'aide de capteur ultrason détectant une variation d'épaisseur traduisant la formation de mousse.

Grâce aux choix spécifiques des caractéristiques de renforts de fibres et de viscosité du mélange de composants chimiques, on obtient un bloc de mousse de PUR/PIR fibrée basse densité présentant une parfaite homogénéité au niveau des fibres, autrement dit le taux de fibres Tf est le même, à +/- 35%, voire avantageusement à +/- 20%, dans toutes les parties du bloc de mousse. Cette caractéristique essentielle permet d'obtenir un bloc de mousse fibrée léger et facilement dimensionnable, en dimensions et en formes, présentant d'excellentes propriétés mécaniques, tels que cela est démontré dans la suite par des tests conduits par la demanderesse.

Ainsi, le bloc de mousse fibrée obtenu selon l'invention se caractérise par sa structure contrôlée et uniforme et ses propriétés mécaniques, en particulier de tenue en fatigue, sa tenue en traction dans le plan normal à l'expansion (mesuré selon la norme ISO 1926) et son faible coefficient de contraction thermique dans ce même plan (mesuré selon la norme ASTM E 228), compatibles avec une utilisation dans les cuves intégrées dans une structure porteuse mais également avantageusement les cuves de type B ou C selon la réglementation (IMO) IGC, c'est-à-dire en tant qu'isolant externe associé aux cuves autoporteuses pour le stockage et/ou le transport de liquide très froid tels que le GNL ou le GPL.

Enfin, les propriétés thermiques du bloc de mousse fibrée sont au moins égales à celles des blocs de mousse basse densité non fibrée de l'état de la technique, plus précisément le bloc de mousse présente, dans l'épaisseur E, une conductivité thermique inférieure à 30 mW/m.K (milliwatt par mètre par Kelvin), soit 0,03 W/m.K, de préférence inférieure à 25 mW/m.K, de manière encore plus préférée inférieure à 23 mW/m.K, mesurée à 20°C.

L'utilisation, dans la composition selon l'invention, d'un agent gonflant chimique, peut être couplée à celle d'un agent d'expansion physique. Dans ce cas, l'agent d'expansion physique est de préférence mélangé sous forme liquide ou supercritique avec la composition de (co)polymère moussable puis converti en phase gazeuse lors de l'étape d'expansion de la mousse de PUR/PIR.

Les agents gonflants chimiques et physiques sont bien connus de l'homme du métier qui choisit les uns et les autres, dans les quantités appropriées, en fonction de la mousse de PUR/PIR qu'il désire obtenir.

Par polyols on entend toute structure carbonée portant au moins deux groupements OH.

L'obtention des mousses PUR, PIR et PUR-PIR dépendant du ratio isocyanate/polyol, on obtiendra une mousse PUR, PIR ou PUR-PIR selon ce ratio. Lorsque le ratio entre un composant polyol et un composant isocyanate est :

- compris entre 1:1 et 1:1,3 on obtiendra une mousse polyuréthane PUR,
- compris entre 1:1,3 et 1:1,8 on obtiendra une mousse polyuréthane PUR-PIR,
- compris entre 1:1,8 et 1:2,8 on obtiendra une mousse polyuréthane PIR.

Les polyisocyanates appropriés pour la formation de mousse PUR, PIR et PUR-PIR sont connus de l'homme du métier et comprennent par exemple les polyisocyanates aromatiques, aliphatiques, cycloaliphatiques, arylaliphatiques et leurs mélanges, avantageusement les polyisocyanates aromatiques.

Des exemples de polyisocyanates appropriés dans le cadre de la présente invention incluent les isocyanates aromatiques tels que les isomères 4,4'-, 2,4'- et 2,2'- du diphenylmethane diisocyanate (MDI), tout composé issu de la polymérisation de ces isomères, le toluène 2,4- et 2,6-diisocyanate (TDI), le m- et p- phenylène diisocyanate, le naphtalène-1,5-diisocyanate; les isocyanates aliphatiques, cycloaliphatiques, arylaliphatiques tels que le 1,6-hexaméthylène

diisocyanate (HDI), l'isophorone diisocyanate (IPDI), le 4,4'-dicyclohexylmethane diisocyanate (H12MDI), le 1,4-cyclo-hexane diisocyanate (CHDI), le bis(isocyanatomethyl)cyclo-hexane (H6XDI,DDI) et le tetramethyxylylene diisocyanate (TMXDI). Il est également possible d'utiliser des mélanges quelconques de ces diisocyanates. De manière avantageuse les polyisocyanates sont les isomères 4,4'-, 2,4'- et 2,2'- du diphenylmethane diisocyanate (MDI).

De manière générale, il est connu d'ajouter lors de la formation des mousses PUR, PIR ou PUR-PIR, au mélange comprenant le polyol, le polyisocyanate et de l'agent gonflant, un catalyseur de réaction qui pourra par exemple être choisi parmi les amines tertiaires, telles que la N,Ndiméthylcyclohexylamine ou la N,N-diméthylbenzylamine ou parmi les composés organo-métalliques à base de bismuth, de potassium ou d'étain.

D'autres caractéristiques avantageuses de l'invention sont présentées succinctement ci-dessous :

- avantageusement, le temps d'imprégnation $t_i$ respecte la formule suivante par rapport au temps de crème $t_c$ de la mousse de polyuréthane/polyisocyanurate :

$$t_i + 0{,}1\, t_i < t_c < 2\, t_i \; ;$$

- selon un mode préféré d'exécution de l'invention, l'expansion de la mousse de polyuréthane/polyisocyanurate fibrée est physiquement contrainte par les parois d'un laminateur double bande (DBL) formant un tunnel, avantageusement de section rectangulaire avec une distance entre les parois disposées latéralement égale à L et une distance entre les parois disposées horizontalement égale à E, enfermant ainsi la mousse fibrée en expansion de manière à obtenir le susdit bloc de mousse de polyuréthane/polyisocyanurate fibrée.

Ainsi, dans ce mode de réalisation avec un DBL, grâce au procédé selon l'invention, on réalise des économies très substantielles, le bloc de mousse fibrée étant homogène et présentant intrinsèquement les excellentes propriétés mécaniques recherchées, notamment suivant les plans normaux à l'axe d'épaisseur E et suivant cette même direction, il n'y a pas lieu de réaliser de découpe ultérieure de ce bloc afin d'enlever des parties d'extrémité dans lesquelles les fibres ne seraient pas présentes et/ou les cellules, de forme ovoïde, non orientées suivant l'axe E. Ainsi, la quantité de perte matière dans le procédé de préparation selon l'invention s'établit entre 0 et 10%, plus généralement inférieure à 5%.

- toujours selon ce mode préféré d'exécution de l'invention, avantageusement, le positionnement des parois du tunnel du laminateur double bande est défini de tel sorte que la contrainte à l'expansion de la mousse de polyuréthane/polyisocyanurate fibrée conduit à un volume de mousse de polyuréthane/polyisocyanurate fibrée, en sortie du laminateur à double bande, représentant entre 85 et 99%, de préférence entre 90% et 99%, du volume d'expansion de cette même mousse de polyuréthane/polyisocyanurate fibrée dans le cas d'une expansion libre, sans la contrainte des parois d'un tel laminateur à double bande. On obtient dans ce cas une mousse dont les cellules, de forme ovoïde, sont préférentiellement orientées suivant l'axe E, conduisant à des propriétés avantageuses de résistance à l'écrasement selon cette direction E (mesurée selon la norme ISO 844), cumulées aux propriétés déjà décrites dans le plan normal à cet axe E. Des tests et expérimentations ont été conduits par la demanderesse pour déterminer les domaines, larges et préférés, mentionnés ci-dessus mais ne sont pas présentés ici par souci de clarté et de concision.

Grâce au susdit paramétrage spécifique de la contrainte à l'expansion de la mousse de PUR/PIR fibrée dans un DBL, on obtient d'une part un bloc de mousse de PUR/PIR fibrée basse densité dans lequel au moins 60%, généralement plus de 80% voire plus de 90%, des cellules emmagasinant un gaz à faible conductivité thermique s'étendent longitudinalement suivant un axe parallèle à l'axe de l'épaisseur E du bloc de mousse et on contribue, outre les choix spécifiques liés aux caractéristiques des renforts de fibres et à la viscosité du mélange de composants chimiques, à une parfaite homogénéité du bloc de mousse fibrée. Ces deux caractéristiques (orientation des cellules & homogénéité du taux Tf de fibres dans le bloc) permettent d'obtenir un bloc de mousse fibrée présentant d'excellentes propriétés mécaniques suivant l'épaisseur E (résistance en compression) et dans un plan normal à la direction de l'épaisseur (résistance à la traction et faible coefficient de contraction thermique).

- selon un autre mode d'exécution offert par l'invention, l'expansion de la mousse de polyuréthane/polyisocyanurate fibrée est libre, soit sans la contrainte exercée par un volume de section fermée.

Ici, à la différence du mode d'exécution de la préparation selon l'invention utilisant un DBL, la préparation de la mousse de polyuréthane/polyisocyanurate fibrée est dite par « expansion libre » dans la mesure où l'expansion de la mousse fibrée n'est pas contrainte sur au moins un côté ou sur au moins une face d'expansion de sorte que le gonflement de la mousse fibrée est libre sur ce côté ou cette face, à l'inverse d'un moule définissant un volume fini.

Classiquement, une expansion libre est réalisée en omettant le couvercle (supérieur) tandis que les parois latérales empêchent un débordement de la mousse sur les côtés et la mousse gonfle naturellement vers le haut, éventuellement au-delà des extrémités supérieures de ces parois latérales.

- avantageusement, suite à l'étape d'expansion libre de la mousse de polyuréthane/polyisocyanurate fibrée, on réalise une découpe de ladite mousse fibrée pour obtenir le susdit bloc de mousse de polyuréthane/polyisocyanurate fibrée.
- selon une possibilité offerte par l'invention, non représentée sur les figures annexées, juste après l'étape d'imprégnation des renforts de fibres, on applique sur le mélange de composants et d'au moins l'agent gonflant imprégnant les fibres un système d'application de pression (pouvant être par exemple un système de rouleaux, de type désigné « nip roll » en anglais) destiné à appliquer une pression sur la face supérieure de l'ensemble constitué du susdit mélange et des fibres. Ce système de pression permet d'une part de planifier la face supérieure de cet ensemble et, par la pression exercée sur l'ensemble, contribue à favoriser l'imprégnation des fibres dans le susdit mélange. Ce système de pression peut consister en un simple ou un double rouleau, dont les positions relatives, au-dessus de l'ensemble liquide, et éventuellement en dessous du support de mousse, sont réglées de telle manière que l'ensemble liquide est contraint de s'étaler de manière parfaitement uniforme. Ainsi, ce faisant, on obtient, en tout point de la section définie par l'espacement entre les deux rouleaux ou du rouleau supérieur et de la bande de transport, une quantité équivalente de l'ensemble liquide. Autrement dit, ce système de pression a pour principal objet de compléter le dispositif de dispense de liquide en ce qu'il contribue à uniformiser, dans l'épaisseur/largeur, l'ensemble liquide avant l'essentiel de son expansion.
- de préférence, la viscosité dynamique $\eta$ du susdit mélange de composants est comprise entre 30 mPa.s et 3000 mPa.s (ou 0,03 Pa.s et 3 Pa.s), de préférence entre 50 mPa.s et 1500 mPa.s (ou 0,05 Pa.s et 1,5 Pa.s) dans les conditions standards de température et de pression (CSTP), correspondant à une température de 25°C et une pression de 1015 mPa.

La viscosité dynamique du mélange de composants peut être déterminée à l'aide d'un viscosimètre, par exemple de type Brookfield, ou d'un rhéomètre, par exemple grâce à la norme ISO 2555.

- avantageusement, au moins 60% des susdites cellules emmagasinant un gaz, avantageusement à faible conductivité thermique, présentent une forme allongée ou étirée suivant un axe parallèle à l'axe d'une épaisseur E du bloc de mousse de polyuréthane/polyisocyanurate fibrée ;
- de façon encore plus avantageuse, au moins 80%, de préférence au moins 90%, des susdites cellules emmagasinant un gaz, avantageusement à faible conductivité thermique, présentent une forme allongée ou étirée suivant un axe parallèle à l'axe d'une épaisseur E du bloc de mousse de polyuréthane/polyisocyanurate fibrée ;

La forme allongée ou étirée peut être définie par une forme étendue en longueur c'est-à-dire qu'elle comporte une dimension : sa longueur, plus grande que ses autres dimensions (largeur et épaisseur).

Il est bien entendu ici que cette caractéristique liée à la forme allongée des cellules emmagasinant un gaz, avantageusement à faible conductivité thermique, et leur taux/proportion dans le bloc selon l'invention est plus particulièrement dirigée dans le cadre de la mise en œuvre du procédé de préparation avec un DBL, mais elle n'est absolument pas limitée à ce cas de figure. En effet, dans le cas d'une expansion libre, plus spécifiquement lorsqu'il n'y a pas de paroi/couvercle supérieur contraignant l'expansion de la mousse fibrée, on obtient également une telle orientation préférentielle des cellules emmagasinant un gaz, avantageusement à faible conductivité thermique.

- selon un mode d'exécution de l'invention, les fibres, longues à continues, consistent en de la fibre de verre, en de la fibre de carbone ou tout autre matière organique ou inorganique, de préférence en de la fibre de verre, typiquement de nature polymérique, métallique, céramique, inorganique vitreuse ou organique comme les fibres naturelles telle que le chanvre ou le lin, de préférence en de la fibre de verre ;
- de préférence, les renforts de fibres sont disposés sur toute une largeur L et l'étape b) d'imprégnation des fibres par le mélange de composants, pour obtenir une mousse de polyuréthane/polyisocyanurate fibrée, et d'un agent gonflant s'opère via un distributeur de liquide contrôlé, simultanément sur toute la largeur L ;

On entend par le terme « simultanément » le fait que le mélange liquide (réactifs et au moins l'agent gonflant) atteint les fibres, sur une section de largeur L, au même moment tout le long de cette section de sorte que l'imprégnation des différents renforts de fibres commence ou s'opère, suivant l'épaisseur (ou la hauteur) du bloc de mousse et pour une même section de largeur, au même instant ou à la même vitesse.

- avantageusement, l'agent gonflant consiste en un agent d'expansion physique et/ou chimique, de préférence une combinaison des deux types.

- de façon préférentielle, l'agent d'expansion physique est choisi parmi les alcanes et les cycloalcanes ayant au moins 4 atomes de carbone, les éthers dialkyls, les esters, les cétones, les acétals, les fluoroalcanes, les fluoro-oléfines ayant entre 1 et 8 atomes de carbone et les tétraalkylsilanes ayant entre 1 et 3 atomes de carbone dans la chaine alkyle, en particulier le tétraméthylsilane, ou un mélange de ceux-ci.

Dans cette hypothèse, à titre d'exemple de composés, il pourra s'agir de propane, n-butane, d'isobutane, cyclobutane, n-pentane, d'isopentane, cyclopentane, cyclohexane, diméthyle éther, méthyle éthyle éther, méthyle butyle éther, méthyle formate, d'acétone et des fluoroalcanes ; les fluoroalcanes étant choisis sont ceux ne dégradant pas la couche d'ozone, par exemple le trifluoropropane, le 1,1,1,2-tétrafluoroéthane, le difluoroéthane et l'heptafluoropropane. Des exemples de fluoro-oléfines incluent le 1-chloro-3,3,3-trifluoropropène, le 1,1,1,4,4,4-hexafluorobutène (par exemple le HFO FEA1100 commercialisé par la société Dupont).

Selon un mode d'exécution préféré de l'invention, l'agent d'expansion physique choisi est le 1,1,1,3,3-pentafluoropropane , ou HFC-245fa, (commercialisé par la société Honeywell, le 1,1,1,3,3-pentafluorobutane, ou 365mfc, (par exemple le solkane® 365mfc commercialisé par la société Solvay), le 2,3,3,3-tétrafluoroprop-1-ene, le 1,1,1,2,3,3,3-heptafluoropropane (également désigné internationalement en tant que le HFC-227ea, par exemple commercialisé par la société Dupont), le 1,1,1,4,4,4-hexafluorobutène (par exemple le HFO FEA1100 commercialisé par la société Dupont), le trans- 1-chloro-3,3,3-trifluoropropene (solstice LBA - société Honeywell) ou un mélange de ceux-ci.

- avantageusement, l'agent d'expansion chimique consiste en de l'eau.
- avantageusement, lors de l'étape a) de mélange de composants chimiques, du gaz de nucléation est incorporé à au moins un composé polyol, de préférence à l'aide d'un mélangeur statique/dynamique sous une pression entre 20 et 250 bars, le gaz de nucléation représentant entre 0 et 50% en volume de polyol, de préférence entre 0,05 et 20% en volume du volume de polyol ;

   de préférence, lors de l'étape a) de mélange des composants chimiques, la température de chacun des réactifs pour l'obtention de polyuréthane/polyisocyanurate est comprise entre 10°C et 40°C, de préférence entre 15°C et 30°C ;
   De préférence, selon un mode de réalisation préféré de l'invention, le mélange final des flux de polyols, isocyanate et/ou agent gonflant a lieu dans une tête de mélange à basse pression (< 20 bars) ou haute pression (> 50 bars) à l'aide d'un mélangeur dynamique ou statique.
   selon une possibilité offerte par l'invention, on ajoute en outre au mélange, à l'étape a), un retardateur de flamme organophosphoré, avantageusement le triéthylphosphate (TEP), le tris(2-chloroiso-propyl) phosphate (TCPP), du tris(1,3-dichloroisopropyl) phosphate (TDCP), du tris(2-chloroéthyl) phosphate ou du tris(2,3-dibromopropyl) phosphate, ou un mélange de ceux-ci, ou un retardateur de flamme inorganique, avantageusement du phosphore rouge, du graphite expansible, un hydrate d'oxyde d'aluminium, un trioxyde d'antimoine, un oxyde d'arsenic, un polyphosphate d'ammonium, un sulfate de calcium ou des dérivés d'acide cyanurique, un mélange de ceux-ci.

On pourra également envisager que le retardateur de flamme utilise de l'éthane phosphonate diéthyle (DEEP), du phosphate triéthyle (TEP), du propyle phosphonate diméthyle (DMPP) ou du phosphate crésyl diphényle (DPC).

Ce retardateur de flamme, lorsqu'il est présent dans la composition selon l'invention, se trouve dans une quantité comprise entre 0,01% et 25% en poids de la mousse de PUR/PIR.

de préférence, le taux de fibres Tf représente entre 7% et 15% en masse du bloc de mousse fibrée. De préférence, le taux de fibres Tf représente au plus 30% en masse du bloc de mousse fibrée.

L'invention concerne aussi un bloc de mousse de polyuréthane/polyisocyanurate fibrée d'un massif d'isolation thermique d'une cuve étanche et thermiquement isolante, directement obtenu grâce au procédé tel que présenté succinctement ci-dessus, le bloc de mousse de polyuréthane/polyisocyanurate fibrée étant composé de cellules emmagasinant un gaz, avantageusement à faible conductivité thermique, et présentant une densité inférieure à 50 kg.m-3 avec un taux de fibres Tf représentant au moins 4% en masse du bloc de mousse fibrée.

Ce bloc de mousse se caractérisant en ce que les fibres sont réparties uniformément dans le bloc de mousse de polyuréthane/polyisocyanurate fibrée, de telle manière que le taux Tf varie uniquement de +/- 35% dans toutes les zones ou portions dudit bloc de mousse de polyuréthane/polyisocyanurate fibrée, voire de préférence dans un domaine encore plus restreint, soit de l'ordre de +/- 20%.

Ainsi, à titre d'exemple, lorsque le taux de fibres Tf dans le bloc est égal à 4%, c'est-à-dire en moyenne dans le bloc, cela signifie que le taux de fibres peut osciller, en fonction de la zone du bloc, entre 2,8% et 5,2% (et préférentiellement entre 3,2% et 4,8%) et si ce taux moyen de fibres Tf se situe à une valeur de 15%, alors le taux de fibres peut osciller, en fonction de la zone du bloc, entre 10,5% et 19,5% (et préférentiellement entre 12% et 18%).

Un tel bloc de mousse présente intrinsèquement des caractéristiques différentiantes par rapport à ceux préparés selon les techniques de préparation antérieures. On peut noter que les caractéristiques se rapportant à la nature ou à la quantité des différents éléments présentés ci-dessus en lien avec le procédé de préparation du bloc de mousse fibrée peuvent définir, le cas échéant, plus précisément le bloc de mousse PUR/PIR fibrée selon l'invention.

Avantageusement, la masse volumique (densité) dudit bloc de mousse est comprise entre 20 et 50 kg/m3, de préférence comprise entre 30 et 45 kg/m3.

L'invention concerne également une cuve étanche et thermiquement isolante intégrée dans une structure porteuse, ladite consistant en :

- une cuve intégrée dans une structure porteuse comportant une cuve étanche et thermiquement isolante comprenant au moins une membrane métallique étanche composée d'une pluralité de virures métalliques ou plaques métalliques pouvant comporter des ondulations et un massif thermiquement isolant comportant au moins une barrière thermiquement isolante adjacente à ladite membrane, ou
- une cuve de type B ou C selon la définition donnée par le code IGC comportant au moins un massif thermiquement isolant,

La cuve selon l'invention se caractérise en ce que le massif thermiquement isolant comporte le bloc de mousse de polyuréthane/polyisocyanurate fibrée décrit succinctement ci-dessus.

On entend par l'expression « code IGC », le « recueil international de règles relatives à la construction et à l'équipement des navires transportant des gaz liquéfiés en vrac », bien connu de l'homme du métier, à l'instar des types B et C de cuves citées, ou en anglais « International Code for the Construction and Equipment of Ships Carrying Liquefied Gases in Bulk ».

On notera que l'on peut utiliser, notamment dans le code IGC, l'expression « cuve (ou citerne) à membrane » en lieu et place de l'expression « cuve intégrée » pour désigner une même catégorie de cuves, équipant notamment des bateaux-citernes transportant et/ou stockant du gaz au moins en partie liquéfié. Les « cuves à membrane » sont intégrée dans une structure porteuse tandis que les cuves de type B ou C sont dites auto-porteuses.

Cette cuve comporte une pluralité de blocs de mousse de polyuréthane/polyisocyanurate fibrée directement obtenu par le procédé de préparation susmentionné.

Enfin, l'invention se rapporte également à un navire pour le transport d'un produit liquide froid, le navire comportant au moins une coque et une cuve étanche et thermiquement isolante telle que décrite succinctement ci-dessus, disposée dans la coque.

Avantageusement, dans le cas où la cuve consiste en une cuve intégrée à une structure porteuse (cuve à membrane), un tel navire comprend au moins une cuve étanche et isolante telle que décrite ci-dessus, ladite cuve comportant deux barrières d'étanchéité successives, l'une primaire au contact avec un produit contenu dans la cuve et l'autre secondaire disposée entre la barrière primaire et une structure porteuse, de préférence constituée par au moins une partie des parois du navire, ces deux barrières d'étanchéité étant alternées avec deux barrières thermiquement isolantes ou une unique barrière thermiquement isolante disposée entre la barrière primaire et la structure porteuse.

De telles cuves sont désignées classiquement en tant que cuves intégrées suivant le code de l'Organisation Maritime Internationale (IMO), telles que par exemple des cuves de type NO, dont des types NO 96®, NO 96L03®, NO 96L03+® ou NO 96 MAX®, ou MARK III®, de préférence des cuves de type NO.

**[0073]** De préférence, la cuve, dite de type à membrane ou de type B ou C, contient un Gaz Naturel Liquéfié (GNL) ou un Gaz Liquéfié (GL).

Brève description des dessins

Brève description des figures

La description qui va suivre est donnée uniquement à titre illustratif et non limitatif en référence aux figures annexées, dans lesquelles :

est une vue schématique illustrant les différentes étapes du procédé de préparation selon l'invention

est une représentation schématique d'un mode de réalisation d'un distributeur de liquide contrôlé selon l'invention

est une vue schématique de deux ensembles de panneaux d'isolation thermique, fixés l'un sur l'autre, formant respectivement un espace primaire et un espace secondaire d'isolation pour une cuve, ces panneaux étant constitués par une pluralité de blocs de mousse de polyuréthane/polyisocyanurate fibrée selon l'invention

est une représentation schématique écorchée d'une cuve de navire méthanier, dans laquelle sont installés les deux ensembles de panneaux d'isolation thermique du type de ceux représentés sur la figure 3, et d'un terminal de chargement/déchargement de cette cuve

**Description des modes de réalisation**

De préférence, la préparation du PUR/PIR fibré selon l'invention est réalisée en présence de catalyseurs permettant de promouvoir la réaction isocyanate-polyol. De tels composés sont décrits par exemple dans le document de l'état de la technique intitulé « Kunststoffhandbuch, volume 7, Polyurethane », Imprimerie Carl Hanser, 3ème édition 1993, chapitre 3.4.1. Ces composés comprennent des catalyseurs à base amine et des catalyseurs à base de composés organiques.

De préférence, la préparation du PUR/PIR fibré selon l'invention est réalisée en présence d'un ou plusieurs stabilisants destinés à promouvoir la formation de structures cellulaires régulières pendant la formation de la mousse. Ces composés sont bien connus de l'homme du métier et, à titre d'exemple, on peut citer les stabilisants de mousse comprenant des silicones tels que les copolymères siloxane-oxyalkylène et les autres organopolysiloxanes.

L'homme du métier connaît les quantités de stabilisants, entre 0,5% et 4% en poids de la mousse de PUR/PIR, à utiliser en fonction des réactifs envisagés.

Selon une possibilité offerte par l'invention, lors de l'étape a), le mélange de composants chimiques peut inclure des plastifiants, par exemple des esters polybasique, préférentiellement dibasique, des acides carboxyliques avec des alcools monohydriques, ou consister en des plastifiants polymériques tels que des polyesters d'acides adipique, sébacique et/ou phtalique. L'homme du métier, en fonction des réactifs utilisés, sait quelle quantité de plastifiants envisagée, classiquement de 0,05% à 7,5% en poids de la mousse polyuréthane/polyisocyanurate.

Des charges organiques et/ou inorganiques, en particulier des charges de renforcement, peuvent également être envisagées dans le mélange de composants chimiques telles que des minéraux siliceux, des oxydes métalliques (par exemple kaolin, oxydes de titane ou de fer) et/ou des sels métalliques. La quantité de ces charges, si elles sont présentes dans le mélange, est classiquement comprise entre 0,5% et 15% en poids de la mousse de PUR/PIR.

Il doit être noté que la présente invention n'entend pas ici ajouter un enseignement technique à la formation d'une mousse de PUR/PIR, tant au niveau de la nature des composants chimiques essentiels et des agents fonctionnels optionnels que de leurs quantités respectives. L'homme du métier sait comment obtenir différents types de mousse de PUR/PIR fibrée et la présente préparation se rapporte, à partir d'un choix spécifique des caractéristiques de perméabilité des renforts de fibres et d'un choix tout aussi spécifique de viscosité de la mousse lors de son imprégnation desdits renforts, considérant par ailleurs un taux de fibres longues à continues relativement important ou important, de telle manière que le temps d'imprégnation $t_i$ est juste inférieur, ou tout juste inférieur, au temps de crème $t_c$ de la mousse de polymère considérée.

Ainsi, la présente invention, telle qu'exposée ici, ne vise pas en premier lieu une nouvelle préparation chimique de mousse de PUR/PIR fibrée mais bien une nouvelle préparation d'un bloc de mousse de PUR/PIR fibrée dans lequel ces caractéristiques particulières de perméabilité des renforts de fibres et de viscosité/temps de crème de la mousse de PUR/PIR sont définies de manière à suivre la règle $t_i < t_c$, et de préférence

$$0.50 < t_i/t_c < 0.91$$

ou autrement dit $t_i + 0,1\, t_i < t_c < 2\, t_i$, l'imprégnation des fibres par la mousse étant réalisée par coulée.

Ainsi, comme on peut le voir sur la figure 1, une pluralité de renforts de fibres 10 sont déroulés et amenés suivant un alignement parallèle entre eux sur ou au-dessus d'une bande de transport 11 destinée à conduire ces renforts 10 et les composants formant la mousse de PUR/PIR. En effet, l'imprégnation des renforts de fibres 10 se fait, dans le cadre de la présente invention, par gravité, c'est-à-dire que l'on coule, depuis un distributeur de liquide situé au-dessus des renforts de fibre 10, le mélange 12 de composants chimiques, d'agent(s) gonflant(s) et d'éventuels autres agents fonctionnels utilisés pour l'obtention de la mousse de PUR/PIR, directement sur les fibres 10.

Ainsi, le susdit mélange 12 doit imprégner l'intégralité des renforts de fibres 10, qu'ils s'agissent pour ces derniers d'un ou plusieurs mats ou d'un ou plusieurs tissus, de façon bien homogène, au cours du temps de crème $t_c$ de sorte que le démarrage de l'expansion de la mousse de PUR/PIR ait lieu après ou au plus tôt juste au moment où les renforts de fibres 10 sont bien tous imprégnés par le mélange 12. Ce faisant, grâce au respect des caractéristiques pour les renforts de fibres et la mousse PUR/PIR définies selon l'invention, l'expansion de la mousse PUR/PIR est réalisée en conservant une homogénéité parfaite des fibres 10 dans le volume du bloc de mousse PUR/PIR.

Dans le cadre de l'invention, le temps de crème des composants du mélange 12 pour former la mousse PUR/PIR est connu de l'homme du métier et choisi de telle manière que la bande de transport 11 amène l'ensemble formé du mélange 12 de composants, de l'agent gonflant et des fibres 10 par exemple jusqu'à un laminateur double bande, non représenté sur les figures annexées, alors que l'expansion de la mousse vient juste de commencer, autrement dit l'expansion de la mousse PUR/PIR se termine alors dans le laminateur à double bande.

Dans un tel mode de réalisation avec un laminateur double bande (DBL), un système de pression, à l'aide d'un ou de deux rouleaux, est éventuellement disposé avant le laminateur double bande, soit entre la zone d'imprégnation du mélange sur les fibres et le laminateur double bande. Dans le cas de l'utilisation d'un DBL, l'expansion du volume de la mousse est réalisée dans le laminateur lorsque le volume d'expansion de cette mousse atteint entre 30% et 60% du volume d'expansion de cette même mousse lorsque l'expansion est laissée libre, soit sans aucune contrainte. Ce faisant, le laminateur à double bande pourra contraindre l'expansion de la mousse de PUR/PIR dans sa deuxième phase d'expansion, lorsque celle-ci est proche ou relativement proche de son expansion maximale, c'est-à-dire lorsque son expansion amène la mousse à proximité de l'ensemble des parois, formant un tunnel de section rectangulaire ou carrée, du laminateur double bande. Selon une manière différente de présenter les choix spécifiques de la préparation selon l'invention, le point de gel du mélange de composants, c'est-à-dire le moment où au moins 60% de la polymérisation du mélange de composants est atteint, autrement dit 70% à 80% de l'expansion volumique maximale du mélange, a lieu impérativement dans le laminateur double bande, éventuellement dans la deuxième moitié de la longueur du laminateur double bande (soit plus proche de la sortie du laminateur que de l'entrée de ce dernier).

Concernant la fonction de distribution simultanée du mélange 12 de composants chimiques et d'agent gonflant sur toute la largeur L des renforts de fibres 10, elle est ici assurée par un distributeur de liquide contrôlé 15, visible sur la figure 2. Un tel distributeur 15 comporte un canal d'amenée 16 de l'ensemble formé du mélange 12 de composants chimiques et au moins de l'agent gonflant depuis le réservoir formant mélangeur à réactifs, non représenté sur les figures annexées, dans lequel d'une part sont mélangés tous les composants chimiques et l'agent gonflant et d'autre part est opérée notamment la nucléation, voire le chauffage, d'un tel mélange. Cet ensemble liquide formé du mélange 12 de composants chimiques et de l'agent gonflant est ensuite réparti, sous pression, dans deux canaux 17 s'étendant transversalement pour aboutir respectivement à deux plaques de distribution 18 identiques, s'étendant suivant la largeur L (chacune présentant une longueur sensiblement égale à L/2), comportant une pluralité de buses 19 pour l'écoulement dudit mélange 12 sur les renforts de fibres 10. Ces buses d'écoulement 19 consistent en des orifices de section calibrée présentant une longueur déterminée. La longueur de ces buses d'écoulement 19 est ainsi déterminée de telle sorte que le liquide sorte avec un débit égal entre toutes les buses 19 afin que l'imprégnation des renforts de fibres 10 s'effectue au même moment, ou simultanément, sur la section de largeur L des renforts de fibres 10, et que la masse surfacique de liquide déposée au droit de chaque buse soit égale. Ce faisant, si l'on considère une section de largeur L des fibres 10, ces dernières sont imprégnées concurremment de sorte que l'imprégnation des couches de fibres 10 par le mélange 12 se réalise, en tous points de cette section, de façon identique, ce qui contribue à obtenir en sortie du laminateur double bande un bloc de mousse fibrée parfaitement homogène.

Le distributeur de liquide contrôlé 15 représenté sur cette figure 2 est un exemple de réalisation dans lequel deux plaques de distribution 18 identiques sont utilisées mais on pourra envisager une conception différente, dans la mesure où la fonction de distribution de liquide simultanée sur la section en largeur des fibres 10 est atteinte. Bien entendu, la caractéristique technique principale utilisée ici réside dans les différentes longueurs des buses d'écoulement 19, plus ou moins longue en fonction du parcours, ou trajet, du mélange 12 liquide depuis le conduit d'amenée 16 du distributeur 15 jusqu'à la buse d'écoulement 19 considérée.

Un des aspects d'importance pour réaliser une bonne imprégnation des renforts de fibres 10 juste avant le temps de crème $t_c$ de la mousse de PUR/PIR réside dans le choix d'une viscosité spécifique du liquide (consistant en le mélange 12 de composants chimiques et de l'agent gonflant) à relier avec les caractéristiques spécifiques des renforts de fibres. Le domaine de viscosité choisi ainsi que les caractéristiques de perméabilité des renforts de fibres doivent permettre une bonne pénétration du liquide dans les premières couches de fibres 10, pour atteindre les suivantes jusqu'à la dernière couche (la couche inférieure de fibres 10, soit celle située le plus bas dans l'empilement des renforts de fibres), de sorte que le temps d'imprégnation $t_i$ des fibres 10 est réalisé dans le laps de temps donné par les composants chimiques correspondant sensiblement (mais toujours inférieur) au temps de crème $t_c$. On choisit la viscosité du mélange 12 de composants, par exemple par chauffage, ajouts de plastifiants et/ou par une nucléation plus ou moins importante, de telle sorte que l'imprégnation de l'ensemble des fibres 10 par le mélange 12 chimiques et de l'agent gonflant, sur une section de largeur L, est obtenue juste avant le temps de crème, c'est-à-dire avant ou juste avant le commencement de l'expansion de la mousse de PUR/PIR.

Le bloc de mousse fibrée est destiné à être utilisé dans un environnement très particulier, et doit donc garantir des propriétés mécaniques et thermiques spécifiques. Le bloc de mousse fibrée obtenu par la préparation selon la présente invention fait ainsi classiquement parti d'un massif d'isolation thermique 30, soit dans l'exemple utilisé sur la figure 3, dans un panneau supérieur ou primaire 31 et/ou un panneau inférieur ou secondaire 32 d'un tel massif d'isolation 30 d'une cuve 71 destinée à recevoir un liquide extrêmement froid, tels qu'un GNL ou un GPL. Une telle cuve 71 peut équiper par exemple un réservoir au sol, une barge flottante ou analogue (tels qu'un FSRU « Floating Storage Regasification Unit » ou un FLNG « Floating Liquefied Natural Gas ») ou encore un navire, tel qu'un méthanier, transportant ce liquide énergétique entre deux ports.

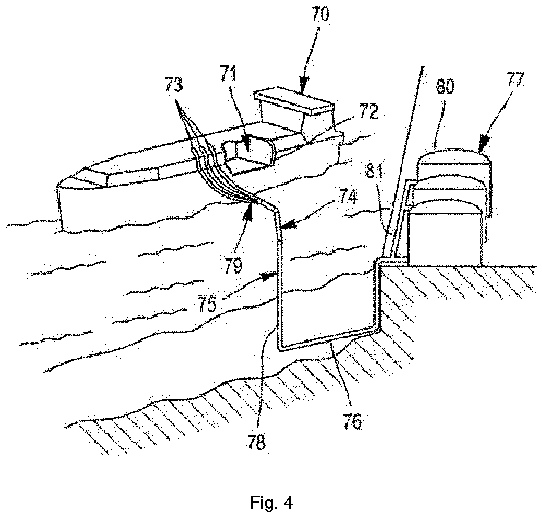

En référence à la figure 4, une vue écorchée d'un navire méthanier 70 montre une cuve étanche et isolante 71 de forme générale prismatique montée dans la double coque 72 du navire. La paroi de la cuve 71 comporte une barrière étanche primaire destinée à être en contact avec le GNL contenu dans la cuve, une barrière étanche secondaire agencée entre la barrière étanche primaire et la double coque 72 du navire, et deux barrières isolante agencées respectivement entre la barrière étanche primaire et la barrière étanche secondaire et entre la barrière étanche secondaire et la double coque 72.

De manière connue en soi, des canalisations de chargement/déchargement 73 disposées sur le pont supérieur du navire peuvent être raccordées, au moyen de connecteurs appropriées, à un terminal maritime ou portuaire pour transférer une cargaison de GNL depuis ou vers la cuve 71.

La figure 4 représente un exemple de terminal maritime comportant un poste de chargement et de déchargement 75, une conduite sous-marine 76 et une installation à terre 77. Le poste de chargement et de déchargement 75 est une installation fixe off-shore comportant un bras mobile 74 et une tour 78 qui supporte le bras mobile 74. Le bras mobile 74 porte un faisceau de tuyaux flexibles isolés 79 pouvant se connecter aux canalisations de chargement/déchargement 73. Le bras mobile 74 orientable s'adapte à tous les gabarits de méthaniers. Une conduite de liaison non représentée s'étend à l'intérieur de la tour 78. Le poste de chargement et de déchargement 75 permet le chargement et le déchargement du méthanier 70 depuis ou vers l'installation à terre 77. Celle-ci comporte des cuves de stockage de gaz liquéfié 80 et des conduites de liaison 81 reliées par la conduite sous-marine 76 au poste de chargement ou de déchargement 75. La conduite sous-marine 76 permet le transfert du gaz liquéfié entre le poste de chargement ou de déchargement 75 et l'installation à terre 77 sur une grande distance, par exemple 5 km, ce qui permet de garder le navire méthanier 70 à grande distance de la côte pendant les opérations de chargement et de déchargement.

Pour engendrer la pression nécessaire au transfert du gaz liquéfié, on met en œuvre des pompes embarquées dans le navire 70 et/ou des pompes équipant l'installation à terre 77 et/ou des pompes équipant le poste de chargement et de déchargement 75.

Comme cela a été énoncé précédemment, l'utilisation ou l'application de l'objet de la présente invention, à savoir en l'espèce le bloc de mousse de polyuréthane/polyisocyanurate fibrée, n'entend pas être réduite à une cuve intégrée dans une structure porteuse mais elle est également prévue pour les cuves de type B et C du code IGC en vigueur à la date du dépôt de la présente demande, mais également pour les versions futures de ce code sauf à ce que ces modifications très substantielles s'y appliquent pour ces cuves de type B et C, étant entendu par ailleurs que d'autres types de cuves pourraient, dans cette hypothèse d'une modification du code IGC, devenir des applications envisageables pour le bloc de mousse PUR/PIR fibrée selon la présente invention.

Dans la suite, une partie des expérimentations et tests réalisés par la demanderesse pour lui permettre d'apprécier l'objet de l'invention et son étendue sont présentés, étant considéré que d'autres tests/expérimentations ont été réalisés et seront susceptibles d'être fournis ultérieurement, si nécessaire/requis.

Une composition de mousse de polyuréthane, intégrant des fibres sous la forme de mats, est utilisée pour démontrer l'invention, ces fibres se présentant toujours comme longues à continues, plus précisément les longueurs de ces fibres sont exactement les mêmes dans les compositions selon l'invention et celles selon l'état de la technique. La demanderesse a notamment testé l'objet de l'invention avec des fibres se présentant sous la forme de tissu et les résultats obtenus sont équivalents ou quasi-similaires à ceux obtenus avec un mat de fibres, tels que présentés ci-dessous.

Pour chacune de ces mousses de PUR, les renforts de fibres présentent des caractéristiques qui sont soit celles définies comme répondant à la présente invention (visibles en caractère gras dans le tableau de résultats présentés ci-dessous) soit des caractéristiques ne répondant pas à la définition de l'invention, plus précisément dans ce dernier cas, le temps d'imprégnation des fibres $t_i$ est supérieure au temps de crème $t_c$ de la mousse de PU. On notera ici que l'on exclut le cas où le temps d'imprégnation des fibres $t_i$ est très inférieur au temps de crème $t_c$, autrement dit le temps de crème $t_c$ serait plus de deux fois supérieur au temps d'imprégnation des fibres $t_i$ ($t_c > 2\,t_i$) car, dans ce cas, le procédé de préparation ne peut avoir, de façon évidente, aucune réalité industrielle.

Ainsi, afin de bien s'assurer que seule la combinaison de caractéristiques particulières d'imperméabilité des renforts de fibres avec le choix d'une mousse de PUR présentant un temps de crème particulier, ou adapté aux caractéristiques desdits renforts de fibres, aucun autre paramètre de la préparation d'un bloc de mousse de PUR n'est modifié ou différent, entre les préparations conformes à l'invention et celles conformes à l'état de la technique. A titre d'exemples non exhaustif, on peut mentionner le fait que la nucléation, les quantités d'agents gonflants, les températures de réaction, nature et quantités du mélange de composants chimiques, procédé de coulage, distance entre le coulage du mélange de composants chimiques et le DBL ou le dispositif permettant l'expansion libre, le cas échéant, sont rigoureusement identiques dans les cas selon l'invention et les cas selon l'état de la technique.

Bien entendu, on a choisi ici d'illustrer l'invention à l'aide d'une mousse de PIR par souci de clarté et de concision mais des résultats équivalents ou quasi-similaires ont été obtenus avec des mousses de PUR ainsi que des mélanges de PUR/PIR.

De la même manière, les préparations de mousse fibrée dont les résultats sont présentés ci-dessous utilisent la technique de l'expansion libre mais la demanderesse a montré que des résultats équivalents ou quasi-similaires, au regard de mousses fibrées selon l'invention et de mousses fibrées selon l'état de la technique, ont été obtenu en utilisant un DBL.

Il est entendu par ailleurs que toutes les compositions testées dans la suite sont considérées à iso-densité, étant entendu que ce paramètre de la densité intervient dans l'appréciation des performances en résistance à la compression.

Pour les compositions selon l'état de la technique, les caractéristiques de perméabilité des renforts de fibres et de temps de crème $t_c$ de la mousse PIR sont les suivants :

| Type de produit | Taux (part relative des différents composants ) | Description | Référence commercial du produit |
|---|---|---|---|
| Polyol 1 | 60-70 | 190-230 mg KOH/g | polyol polyester aromatique |
| Polyol 2 | 15-25 | 295-335 mg KOH/g | polyol polyester aromatique |
| Retardateur de flamme | 10-20 | | triéthylphosphate |
| Isocyanate | 240-290 | 30-31,5% NCO | isocyanate polymérique de MDI de type Voracor CM 388 |
| Eau (agent gonflant chimique) | 0,5-0,7 | | |
| Agent gonflant physique | 20-24 | Mélange d'isomères du pentane : cyclo et iso pentane | |
| Surfactant silicone | 0,5-1,5 | silicone greffé PEO/PPO | |
| Catalyseurs | 1-1,6 | Voracor CM420 | Voracor CM639 |
| Additifs | 1-2 | | Voratherm CN821 |

$$K_c = 5.2 \ 10^{-9} \ m^2$$

avec $r_f$ = 16 $\mu$m ; p = 0,978 ; k = 6 ; $_T$ = 2 ; $V_f$ = 0,022
$t_i$ (temps d'imprégnation) = 41 s (seconde)
avec $\eta$ = 0,45 Pa.s ; $e_m$ = 2,4 mm ; $\Delta P$ = 5140 Pa ; $M_{sm}$ = 4,2 kg/m² $t_c$ (temps de crème) = 15 s

Pour les compositions selon l'invention, les caractéristiques de perméabilité des renforts de fibres et de temps de crème $t_c$ de la mousse PIR sont les suivants :

| Type de produit | Taux (part relative des différents composants ) | Description | Référence commercial du produit |
|---|---|---|---|
| Polyol 1 | 60-70 | 190-230 mg KOH/g | polyol polyester aromatique |
| Polyol 2 | 15-25 | 295-335 mg KOH/g | polyol polyester aromatique |
| Retardateur de flamme | 10-20 | | triéthylphosphate |
| Isocyanate | 240-290 | 30-31,5% NCO | isocyanate polymérique de MDI de type Voracor CM 388 |
| Eau (agent gonflant chimique) | 0,5-0,7 | | |
| Agent gonflant physique | 20-24 | Mélange d'isomères du pentane : cyclo et iso pentane | |
| Surfactant silicone | 0,5-1,5 | silicone greffé PEO/PPO | |
| Catalyseurs | 1-1,6 | | Voracor CM639 |

(suite)

| Type de produit | Taux (part relative des différents composants ) | Description | Référence commercial du produit |
|---|---|---|---|
| | | Voracor CM420 | |
| Additifs | 1-2 | | Voratherm CN821 |

$$K_c = 3 \; 10^{-8} \; m^2$$

avec $r_f$ = 106 $\mu$m ; p = 0,94 ; k = 6 ; $_T$ = 2 ; $V_f$ = 0,057
$t_i$ = 11 s
avec $\eta$ = 0,45 Pa.s ; $e_m$ = 3 mm ; $\Delta P$ = 4116 Pa ; $M_{sm}$ = 4,2 kg/m$^2$
$t_c$ = 15 s

On note que le temps de crème $t_c$ pour les mousses PIR utilisées est logiquement le même, car la mousse utilisée est identique, quelque soient les cas, selon l'état de la technique et selon l'invention.

Suite à la réalisation des essais, certains résultats sont présentés, de manière simplifiée, ci-dessous pour illustrer les découvertes de la demanderesse, dans le cas où les renforts de fibres se présentent sous la forme d'au moins un mat de fibres de verre.

| Mélange de composants chimiques et d'agents gonflant ( iso-densité < 50 kg.m $^{-3}$ des compositions testées, avec fibres) | caractérisation de la répartition des fibres dans la mousse (par réalisation d'une carotte dans la hauteur/épaisseur du bloc) | performance relative à la traction, en application de la norme ISO 1926 (traction dans le plan du/des mats) | coefficient de contraction thermique, en application de la norme ASTM E 228 |
|---|---|---|---|

| Environ 4% massique fibres de verre (état de la technique) | 3,6 +/- 0,6 (écart type), soit +/-18% (% écart type) | | 23°C | -170°C | 37±5 10^{-6} K^{-1} |
|---|---|---|---|---|---|
| | | Et (MPa) | X : 7±1 Y : 11±3 | X : 12±1 Y : 17±4 | |
| | | Rt (MPa) | X : 0,18±0,01 Y : 0,24±0,04 | X : 0,14±0,02 Y : 0,21±0,05 | |

avec Et : module de Young et Rt : limite d'élasticité

| Environ 8% massique fibres de verre (état de la technique) | 8,9 +/- 9 (écart type), soit +/-102% (% écart type) | Non mesurable Hétérogénéité du matériau importante : séparation des fibres et de la mousse, peu d'imprégnation et pas de dispersion des fibres | Non mesurable |
|---|---|---|---|

| Environ 8% massique fibres de verre | 8,7 +/- 2 (écart type), soit +/-26% (% écart type) | | 23°C | -170°C | 27±6 10^{-6} K^{-1} |
|---|---|---|---|---|---|
| | | Et (MPa) | X : 23±5 Y : 19±5 | X : 32±9 Y : 30±6 | |
| | | Rt (MPa) | X : 0.29±0,06 Y : 0.22±0,03 | X : 0,20±0,05 Y : 0,22±0,05 | |

| Environ 14% massique fibres de verre | 13,8 +/- 3,6 (écart type), soit +/-31% (% écart type) | | 23°C | -170°C | 25±6 10^{-6} K^{-1} |
|---|---|---|---|---|---|
| | | Et (MPa) | X : na Y : 19±1 | X : 36 Y : 39±12 | |
| | | Rt (MPa) | X : na Y : 0,31±0,02 | X : 0,19 Y : 0,25±0,09 | |

Comme on le voit avec les résultats présentés dans le tableau ci-dessus, sur les trois critères considérés pour comparer les mousses fibrées obtenues, celles conformes à l'invention présentent des résultats très significativement meilleurs que ceux des mousses fibrées selon l'état de la technique.

Par ailleurs, il faut noter que les mousses PUR/PIR fibrées selon l'invention ne présentent aucune dégradation significative de leur propriété relative à la (très faible) conductivité thermique. Ainsi, à titre d'exemple, pour la mousse fibrée à 10% de fibres en masse selon l'invention, on obtient les valeurs suivantes de conductivité thermique :

| conductivité thermique (mW/m.K) | | |
|---|---|---|
| à -160°C | à -120°C | à +20°C |
| 10-14 | 11-16 | 23-27 |

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

**Revendications**

1. Procédé de préparation d'un bloc de mousse de polyuréthane/polyisocyanurate fibrée d'un massif d'isolation thermique d'une cuve étanche et thermiquement isolante, le bloc de mousse de polyuréthane/polyisocyanurate fibrée étant composé de cellules emmagasinant un gaz et présentant une densité inférieure à 50 kg.m$^{-3}$ avec un taux de fibres $T_f$ représentant au moins 4% en masse du bloc de mousse fibrée, le procédé de préparation comportant les étapes suivantes :

a) une étape de mélange (12) de composants chimiques nécessaires à l'obtention d'une mousse de polyuréthane/polyisocyanurate, lesdits composants comportant des réactifs pour l'obtention de polyuréthane/polyisocyanurate, éventuellement au moins un catalyseur de réaction, éventuellement au moins un émulsifiant, et au moins un agent gonflant,

b) une étape d'imprégnation, par écoulement gravitationnel du susdit mélange (12) de composants chimiques, d'une pluralité de renforts de fibres (10) choisis parmi les tissus de fibres et les mâts de fibres, lesdites fibres ayant une longueur d'au moins cinq centimètres (cm), disposés en couches superposées, dans lesquels les renforts de fibres (10) s'étendent essentiellement suivant une direction perpendiculaire à la direction dudit écoulement gravitationnel, ces renforts de fibres (10) présentant une perméabilité $K_c$ au susdit mélange (12) de composants chimiques, exprimée en m$^2$, égale à :

$$K_c = (r_f{}^2 \times p^3) / (k \times \tau^2 \times 4 \times V_f{}^2) \, ,$$

avec

$r_f$ = rayon des fibres, exprimé en mètre (m),
p = porosité des fibres (10) (sans dimension), valeur comprise entre 0 et 1,
k = facteur de forme (sans dimension), fonction de la nature du renfort de fibres (10), avec k = 1 pour un tissu de fibres, k = 6 pour un mat de fibres,
$\tau$ = tortuosité (sans dimension), fonction de la disposition des fibres,
$V_f$ = fraction volumique des fibres (proportion de fibres dans un volume du renfort), valeur compris entre 0 et 1,

c) une étape de formation et d'expansion de la mousse de polyuréthane/polyisocyanurate fibrée,

**caractérisé en ce que** le susdit mélange (12) de composants chimiques présentent une viscosité dynamique $\eta$, lors de l'étape b) d'imprégnation, de telle sorte qu'un temps d'imprégnation des fibres $t_i$ est inférieur au temps de crème $t_c$ de la mousse de polyuréthane/polyisocyanurate, le temps d'imprégnation des fibres $t_i$ étant égal à :

$$t_i = (\eta \times e_m{}^2) / (K_c \times \Delta P) \, ,$$

$$\Delta P = (M_{sm} \times g_T \times k_p)$$

, avec

$\eta$ = la viscosité dynamique, exprimée en Pascal seconde (Pa.s),

$e_m$ = somme des épaisseurs moyennes des renforts de fibres (10), exprimée en mètre (m), chaque renfort de fibres présentant une épaisseur moyenne correspondant à la moyenne des distances entre une pluralité de paires d'extremums locaux dudit renfort de fibres (10) espacés l'un de l'autre selon une direction d'épaisseur dudit renfort de fibres,

$\Delta P$ = gradient de pression, exprimé en Pascal par mètre (Pa),

$M_{sm}$ = masse surfacique du susdit mélange (12) de composants chimiques, exprimée en masse par unité de surface (kg.m$^{-2}$),

$g_T$ = force de gravitation terrestre, ici considérée égale à 9,8 N.kg$^{-1}$ ,

$k_p$ = facteur de moyenne de pression, constante égale à 0,5,

2.  Procédé selon la revendication 1, dans lequel le temps d'imprégnation $t_i$ respecte la formule suivante par rapport au temps de crème $t_c$ de la mousse de polyuréthane/polyisocyanurate :

$$0.50 < {t_i}/{t_c} < 0.91$$

3.  Procédé selon la revendication 1 ou 2, dans lequel l'expansion de la mousse de polyuréthane/polyisocyanurate fibrée est physiquement contrainte par les parois d'un laminateur double bande formant un tunnel, avantageusement de section rectangulaire avec une distance entre les parois disposées latéralement égale à L et une distance entre les parois disposées horizontalement égale à E, enfermant ainsi la mousse fibrée en expansion de manière à obtenir le susdit bloc de mousse de polyuréthane/polyisocyanurate fibrée.

4.  Procédé selon la revendication 3, dans lequel le positionnement des parois du tunnel du laminateur double bande est défini de tel sorte que la contrainte à l'expansion de la mousse de polyuréthane/polyisocyanurate fibrée conduit à un volume de mousse de polyuréthane/polyisocyanurate fibrée, en sortie du laminateur à double bande, représentant entre 85% et 99%, de préférence entre 90% et 99%, du volume d'expansion de cette même mousse de polyuréthane/polyisocyanurate fibrée dans le cas d'une expansion libre, sans la contrainte des parois d'un tel laminateur à double bande.

5.  Procédé selon la revendication 1 ou 2, dans lequel l'expansion de la mousse de polyuréthane/polyisocyanurate fibrée est libre, soit sans la contrainte exercée par un volume de section fermée.

6.  Procédé selon la revendication 5, dans lequel, suite à l'étape d'expansion libre de la mousse de polyuréthane/polyisocyanurate fibrée, on réalise une découpe de ladite mousse fibrée pour obtenir le susdit bloc de mousse de polyuréthane/polyisocyanurate fibrée.

7.  Procédé selon l'une quelconque des revendications précédentes, dans lequel la viscosité dynamique $\eta$ du susdit mélange (12) de composants est comprise entre 30 mPa.s et 3000 mPa.s, de préférence entre 50 mPa.s et 1500 mPa.s dans les conditions standards de température et de pression.

8.  Procédé selon l'une quelconque des revendications précédentes, dans lequel au moins 60% des susdites cellules emmagasinant un gaz, avantageusement à faible conductivité thermique, présentent une forme allongée ou étirée suivant un axe parallèle à l'axe d'une épaisseur E du bloc de mousse de polyuréthane/polyisocyanurate fibrée.

9.  Procédé selon l'une quelconque des revendications précédentes, dans lequel au moins 80%, de préférence au moins 90%, des susdites cellules emmagasinant un gaz, avantageusement à faible conductivité thermique, présentent une forme allongée ou étirée suivant un axe parallèle à l'axe d'une épaisseur E du bloc de mousse de polyuréthane/polyisocyanurate fibrée.

10.  Procédé selon l'une quelconque des revendications précédentes, dans lequel les fibres, longues à continues, consistent en de la fibre de verre, en de la fibre de carbone ou tout autre matière organique ou inorganique, de préférence en de la fibre de verre.

11.  Procédé selon l'une quelconque des revendications précédentes, dans lequel les renforts de fibres (10) sont disposés sur toute une largeur L et l'étape b) d'imprégnation des fibres par le mélange (12) de composants, pour obtenir une mousse de polyuréthane/polyisocyanurate fibrée, et d'un agent gonflant s'opère, via un distributeur de liquide contrôlé (15), simultanément sur toute la largeur L.

12. Procédé selon l'une quelconque des revendications précédentes, dans lequel l'agent gonflant consiste en un agent d'expansion physique et/ou chimique, de préférence une combinaison des deux types.

13. Procédé selon la revendication 12, dans lequel l'agent d'expansion physique est choisi parmi les alcanes et les cycloalcanes ayant au moins 4 atomes de carbone, les éthers dialkyls, les esters, les cétones, les acétals, les fluoroalcanes, les fluoro-oléfines ayant entre 1 et 8 atomes de carbone et les tétraalkylsilanes ayant entre 1 et 3 atomes de carbone dans la chaine alkyle, en particulier le tétraméthylsilane, ou un mélange de ceux-ci.

14. Procédé selon la revendication 12, dans lequel l'agent d'expansion chimique consiste en de l'eau.

15. Procédé selon la revendication 13, dans lequel, lors de l'étape a) de mélange (12) de composants chimiques, du gaz de nucléation est incorporé à au moins un composé polyol, de préférence à l'aide d'un mélangeur statique/dynamique sous une pression entre 20 et 250 bars, le gaz de nucléation représentant entre 0 et 50% en volume de polyol, de préférence entre 0,05 et 20% en volume du volume de polyol.

16. Procédé selon l'une quelconque des revendications précédentes, dans lequel, lors de l'étape a) de mélange (12) des composants chimiques, la température de chacun des réactifs pour l'obtention de polyuréthane/polyisocyanurate est comprise entre 10°C et 40°C, de préférence entre 15°C et 30°C.

17. Procédé selon l'une quelconque des revendications précédentes, dans lequel on ajoute en outre au mélange, à l'étape a), un retardateur de flamme organophosphoré, avantageusement le triéthylphosphate (TEP), le tris(2-chloroiso-propyl) phosphate (TCPP), du tris(1,3-dichloroisopropyl) phosphate (TDCP), du tris(2-chloroéthyl) phosphate ou du tris(2,3-dibromopropyl) phosphate, ou un mélange de ceux-ci, ou un retardateur de flamme inorganique, avantageusement du phosphore rouge, du graphite expansible, un hydrate d'oxyde d'aluminium, un trioxyde d'antimoine, un oxyde d'arsenic, un polyphosphate d'ammonium, un sulfate de calcium ou des dérivés d'acide cyanurique, un mélange de ceux-ci.

18. Procédé selon l'une quelconque des revendications précédentes, dans lequel le taux de fibres $T_f$ représente entre 7% et 15% en masse du bloc de mousse fibrée.

19. Bloc de mousse de polyuréthane/polyisocyanurate fibrée d'un massif d'isolation thermique (30) d'une cuve étanche et thermiquement isolante, directement obtenu grâce au procédé selon l'une quelconque des revendications 1 à 18, le bloc de mousse de polyuréthane/polyisocyanurate fibrée étant composé de cellules emmagasinant un gaz, avantageusement à faible conductivité thermique, et présentant une densité inférieure à 50 kg.m$^{-3}$ avec un taux de fibres $T_f$ représentant au moins 4% en masse du bloc de mousse fibrée,
**caractérisé en ce que** les fibres sont réparties uniformément dans le bloc de mousse de polyuréthane/polyisocyanurate fibrée, de telle manière que le taux $T_f$ varie uniquement de +/- 35%, de préférence de +/- 20%, dans toutes les zones ou portions dudit bloc de mousse de polyuréthane/polyisocyanurate fibrée.

20. Cuve étanche et thermiquement isolante, ladite consistant en :

- une cuve intégrée dans une structure porteuse comportant une cuve étanche et thermiquement isolante comprenant au moins une membrane métallique étanche composée d'une pluralité de virures métalliques ou plaques métalliques pouvant comporter des ondulations et un massif thermiquement isolant (30) comportant au moins une barrière thermiquement isolante adjacente à ladite membrane, ou
- une cuve de type B ou C selon la définition donnée par le code IGC comportant au moins un massif thermiquement isolant (30),

**caractérisée en ce que** le massif thermiquement isolant (30) comporte le bloc de mousse de polyuréthane/polyisocyanurate fibrée selon la revendication 19.

21. Navire (70) pour le transport d'un produit liquide froid, le navire comportant au moins une coque (72) et une cuve étanche et thermiquement isolante (71) selon la revendication 20 disposée dans la coque.

**Patentansprüche**

1. Verfahren zur Herstellung eines Blocks aus Polyurethan/Polyisocyanurat-Faserschaum eines wärmeisolierenden Massivs eines dichten und wärmeisolierenden Gefäßes, wobei der Block aus Polyurethan/Polyisocyanurat-Faserstoff sich aus gasspeichernden Zellen zusammensetzt und eine Dichte von weniger als 50 kg.m$^{-3}$ mit einem Faseranteil $T_f$ von mindestens 4 Masseprozent des Faserschaumblocks aufweist, wobei das Herstellungsverfahren die folgenden Schritte umfasst:

   a) Schritt des Mischens (12) der zur Erzeugung eines Polyurethan/Polyisocyanurat-Schaumes erforderlichen chemischen Komponenten, wobei die Komponenten Reagenzien zu Erzeugung eines Polyurethan/Polyisocyanurat enthalten, wahlweise mindestens einen Reaktionskatalysator, wahlweise mindestens einen Emulgator und mindestens ein Quellmittel,
   b) einen Schritt des Imprägnierens einer Vielzahl von Faserverstärkungen (10), die aus Fasergeweben und Fasermasten ausgewählt sind, durch Gravitationsfluss der Mischung (12) aus chemischen Komponenten, wobei die Fasern eine Länge von mindestens 5 Zentimeter (cm) haben, in übereinanderliegenden Schichten angeordnet sind, in denen sich die Faserverstärkungen (10) im Wesentlichen in einer Richtung senkrecht zur Richtung des Gravitationsflusses erstrecken, wobei diese Faserverstärkungen (10) eine Durchlässigkeit $K_c$ für das Gemisch (12) aus chemischen Komponenten, ausgedrückt in m$^2$, aufweisen, gleich:

$$K_c = (r_f^2 \times p^3) / (k \times T^2 \times 4 \times V_f^2),$$

   mit

   $r_f$ = Faserradien ausgedrückt in Metren (m),
   p= Porosität des Fasern (10) (dimensionslos), Wert zwischen 0 und 1,
   k = Formfaktor (dimensionslos), abhängig von der Art der Verstärkung aus Fasern (10),
   mit k = 1 für ein Fasergewebe, k = 6 für eine Fasermatte,
   T = Tortuosität (dimensionslos), abhängig von der Anordnung der Fasern,
   $V_f$ = Volumenfraktion der Fasern (Anteil der Fasern in einem Volumen der Faser), Wert zwischen 0 und 1,

   c) einen Schritt zum Bilden und Ausdehnen des Schaumstoffs aus Po lyurethan/Polyisocyanurat-Faserschaum,

   **dadurch gekennzeichnet, dass** die Mischung (12) aus chemischen Komponenten im Schritt b) des Imprägnierens eine dynamische Viskosität η aufweisen, so dass eine Imprägnierzeit der Fasern $t_i$ kleiner ist als die Cremezeit $t_c$ des Polyurethan/Polyisocyanurat-Schaums, wobei die Imprägnierzeit der Fasern $t_i$ gleich ist:

$$t_i = (η \times e_m^2) / (K_c \times \Delta P),$$

$$\Delta P = (M_{sm} \times g_T \times k_p),$$

   mit

   η = die dynamische Viskosität, ausgedrückt in Pascal Sekunden (Pa.s),
   $e_m$ = Summe der mittleren Dicken der Faserverstärkungen (10), ausgedrückt in Metern (m), wobei jede Faserverstärkung eine mittlere Dicke aufweist, die dem Mittelwert der Abstände zwischen einer Vielzahl von Paaren lokaler Extrema der Faserverstärkung (10) entspricht, die entlang einer Dickenrichtung der Faserverstärkung voneinander beabstandet sind,
   $\Delta$ P= Druckgradient, ausgedrückt in Pascal pro Meter (Pa),
   $M_{sm}$ = Flächenmasse der Mischung (12) aus chemischen Bestandteilen, ausgedrückt als Masse pro Flächeneinheit (kg.m$^{-2}$),
   $g_T$ = Erdanziehungskraft, hier angenommen als 9,8 N.kg-1
   $k_p$ = Druckmittelfaktor, konstant gleich 0,5

2. Verfahren gemäß Anspruch 1, wobei die Imprägnierzeit $t_i$ im Vrehältnis zur Cremezeit $t_c$ des Polyurethan/Polyisocyanurat-Schaums folgender Formel entspricht:

$$0.50 < {t_i}/{t_c} < 0.91$$

3.  Verfahren gemäß Anspruch 1 oder 2, wobei die Ausdehnung des Polyurethan/Polyisocyanurat-Schaums durch die Wände eines Doppelband-Laminators physikalisch eingeschränkt wird, die einen Tunnel bilden, vorzugsweise mit rechteckigem Querschnitt mit einem Abstand zwischen den seitlich angeordneten Wänden gleich L und einem Abstand zwischen den horizontal angeordneten Wänden gleich E, so dass der ausdehnende Faserschaum eingeschlossen wird, so dass der oben genannte Block aus Polyurethan/Polyisocyanurat-Faserschaum entsteht.

4.  Verfahren gemäß Anspruch 3, wobei die Anordnung der Tunnelwände des Doppelband-Laminators so festgelegt wird, dass die Beschränkung der Ausdehnung des Polyurethan/Polyisocyanurat-Faserschaums zu einem Volumen des Polyurethan/Polyisocyanurat-Faserschaums am Ausgang des Doppelband-Laminators zwischen 85 % und 99%, vorzugsweise zwischen 90 % und 99%, des Ausdehnungsvolumens desselben Polyurethan/Polyisocyanurat-Faserschaums im Falle einer freien Ausdehnung ohne die Beschränkung durch die Wände des Doppelband-Laminators, führt.

5.  Verfahren gemäß Anspruch 1 oder 2, wobei die Ausdehnung des Polyurethan/Polyisocyanurat-Faserschaums frei ist, d.h. ohne die Einschränkung, welche durch ein Volumen mit geschlossenem Querschnitt ausgeübt wird.

6.  Verfahren gemäß Anspruch 5, wobei, nachfolgend zum Schritt der freien Ausdehnung des Polyurethan/Polyisocyanurat-Faserschaums ein Zuschnitt des Faserschaums durchgeführt wird, um den Block aus Polyurethan/Polyisocyanurat-Faserschaum zu erhalten.

7.  Verfahren gemäß einem der vorstehenden Ansprüche, wobei die dynamische Viskosität $\eta$ der Mischung (12) der Komponenten zwischen 30 mPa.s und 3000 mPa.s, vorzugsweise zwischen 50 mPa.s und 1500 mPa.s, unter Standardbedingungen von Temperatur und Druck liegt.

8.  Verfahren gemäß einem der vorstehenden Ansprüche, wobei mindestens 60% der gasspeichernden Zellen, vorzugsweise mit schwacher Wärmeleitung, eine längliche oder gestreckte Form entlang einer Parallelachse zur Achse einer Stärke E des Blocks aus Polyurethan/Polyisocyanurat-Faserschaum aufweisen.

9.  Verfahren gemäß einem der vorstehenden Ansprüche, wobei mindestens 80%, vorzugsweise mindestens 90%, der gasspeichernden Zellen, vorzugsweise mit schwacher Wärmeleitung, eine längliche oder gestreckte Form entlang einer Parallelachse zur Achse einer Stärke E des Blocks aus Polyurethan/Polyisocyanurat-Faserschaum aufweisen

10. Verfahren gemäß einem der vorstehenden Ansprüche, wobei die langen bis endlosen Fasern aus Glasfasern, Kohlefasern oder einem anderen organischen oder anorganischen Material, vorzugsweise aus Glasfaser, bestehen.

11. Verfahren gemäß einem der vorstehenden Ansprüche, wobei die Faserverstärkungen (10) auf einer ganzen Breite L angeordnet sind und der Schritt b) des Imprägnierens der Fasern durch die Mischung (12) der Komponenten, um einen Polyurethan/Polyisocyanurat-Faserschaum zu erhalten, und eines Quellstoffes durchgeführt wird auf der gesamten Breite L gleichzeitig, mittels einer Abgabevorrichtung für eine kontrollierte Flüssigkeit (15).

12. Verfahren gemäß einem der vorstehenden Ansprüche, wobei der Quellstoff aus einem physikalischen und/oder chemischen Ausdehnungsmittel besteht, vorzugsweise aus einer Kombination aus Beiden.

13. Verfahren gemäß Anspruch 12, wobei das physikalische Ausdehnungsmittel ausgewählt wird aus Alkanen und Cycloalkanen mit mindestens 4 Kohlenstoffatomen, Dialkylethern, Estern, Cetonen, Acetalen, Fluoralkanen, Fluorolefinen mit 1 bis 8 Kohlenstoffatomen und Tetraktysiloxanen mit zwischen 1 und 3 Kohlenstoffatomen in der Alkylkette, insbesondere Tetramethylsilan, oder ein Gemisch davon.

14. Verfahren gemäß Anspruch 12, wobei das chemische Ausdehnungsmittel aus Wasser besteht.

15. Verfahren gemäß Anspruch 13, wobei, während des Schrittes a) des Mischens (12) der chemischen Komponenten, Kerngas in mindestens eine Polyolverbindung eingearbeitet wird, vorzugsweise mit Hilfe eines statischen/dynamischen Mischers bei einem Druck zwischen 20 und 250 bar, wobei das Kerngas zwischen 0 und 50% Volumen des Polyols, vorzugsweise zwischen 0,05 und 20% Volumen, aufweist.

**16.** Verfahren gemäß einem der vorstehenden Ansprüche, wobei, während des Schrittes a) des Mischens (12) der chemischen Komponenten, die Temperatur eines jedes der Reagenzien zur Erzeugung des Polyurethan/Polyisocyanurat zwischen 10°C und 40°C, vorzugsweise zwischen 15°C und 30°C, liegt.

**17.** Verfahren gemäß einem der vorstehenden Ansprüche, wobei man weiterhin zum Gemisch, im Schritt a), ein Organophosphor-Flammschutzmittel, vorzugsweise Triethylphosphat (TEP), Tris(2-chloroiso-propyl)phosphat (TCPP), Tris(1,3-dichloroisopropyl)phosphat (TDCP), Tris(2-chloroethyl)phosphat oder Tris(2,3-dibromopropyl)phosphat, zugesetzt wird, oder eine Mischung davon, oder ein anorganisches Flammschutzmittel, vorzugsweise roter Phosphor, expandierbarer Graphit, Aluminiumoxidhydrat, Antimontrioxid, Arsenoxid, Ammoniumpolyphosphat, Calciumsulfat oder Cyanursäurederivate, oder eine Mischung davon.

**18.** Verfahren gemäß einem der vorstehenden Ansprüche, wobei der Faseranteil $T_f$ zwischen 7 und 15 Masseprozent des Faserblocks beträgt.

**19.** Block aus Polyurethan/Polyisocyanurat-Faserschaum eines wärmeisolierenden Massivs (30) eines dichten und wärmeisolierenden Gefäßes, unmittelbar erzeugt durch ein Verfahren gemäß einem der vorstehenden Ansprüche 1 bis 18, wobei der Block aus Polyurethan/Polyisocyanurat-Faserschaum sich aus gasspeichernden Zellen zusammensetzt, vorzugsweise mit schwacher Wärmeleitung, und eine Dichte von weniger als 50 kg.m$^{-3}$ mit einem Fase-ranteil $T_f$ von mindestens 4 Masseprozent des Faserschaumblocks aufweist,
**dadurch gekennzeichnet, dass** die Fasern gleichmäßig in dem Block aus Polyurethan/Polyisocyanurat-Faserschaum verteilt sind, so dass der Anteil $T_f$ lediglich um +/- 35 %, vorzugsweise um +/- 20 %, in allen Bereich oder Teilen des Blocks aus Polyurethan/Polyisocyanurat-Faserschaum variiert.

**20.** Dichtes und wärmeisolierendes Gefäß, bestehend aus:

- einem in eine Haltestruktur integriertes Gefäß umfassen eine dichtes und wärmeisolierendes Gefäß, welches mindesten eine dichte metallische Membran, bestehend aus einer Vielzahl vom metallischen Plankengängen oder metallische Platten, welche Wellen enthalten können, und ein wärmeisolierendes Massiv (30), welches mindestens eine wärmeisolierende Sperre angrenzend an die Membran umfasst, oder
- ein Gefäß Typ B oder C gemäß der Definition des IGC-Codes umfassend mindestens ein wärmeisolierendes Massiv (30), **dadurch gekennzeichnet, dass** das wärmeisolierende Massiv einen Block aus Polyurethan/Polyisocyanurat-Faserschaum gemäß Anspruch 19 umfasst.

**21.** Schiff (70) für den Transport einer kalten Flüssigkeit, wobei das Schiff mindestens eine Hülle (72) und ein in der Hülle angeordnetes dichtes und wärmeisolierendes Gefäß (71) gemäß Anspruch 20 umfasst.

## Claims

**1.** A process for the preparation of a block of fiber-reinforced polyurethane/polyisocyanurate foam of a thermal insulation slab of a sealed and thermally insulating tank, the block of fiber-reinforced polyurethane/polyisocyanurate foam being composed of cells storing a gas and exhibiting a density of less than 50 kg.m$^{-3}$ with a content of fibers $C_f$ representing at least 4% by weight of the block of fiber-reinforced foam, the preparation process comprising the following stages:

a) a stage of mixing (12) chemical components necessary for obtaining a polyurethane/polyisocyanurate foam, said components comprising reactants for obtaining polyurethane/polyisocyanurate, optionally at least one reaction catalyst, optionally at least one emulsifier, and at least one blowing agent,
b) a stage of impregnation, by gravitational flow of the abovesaid mixture (12) of chemical components, of a plurality of fiber reinforcements (10) chosen from fabrics of fibers and mats of fibers, said fibers having a length of at least five centimeters (cm), arranged in superimposed layers, in which the fiber reinforcements (10) extend essentially along a direction perpendicular to the direction of said gravitational flow, these fiber reinforcements (10) exhibiting a permeability $K_c$ to the abovesaid mixture (12) of chemical components, expressed in m$^2$, equal to:

$$K_c = (r_f^2 \times p^3)/(k \times \tau^2 \times 4 \times V_f^2),$$

with

$r_f$ = radius of the fibers, expressed in meters (m),
p = porosity of the fibers (10) (dimensionless), value between 0 and 1,
k = form factor (dimensionless), dependent on the nature of the fiber reinforcement (10), with k = 1 for a fabric of fibers, k = 6 for a mat of fibers,
$\tau$ = tortuosity (dimensionless), dependent on the arrangement of the fibers,
$V_f$ = volume fraction of the fibers (proportion of fibers in a volume of the reinforcement), value between 0 and 1,

c) a stage of formation and of expansion of the fiber-reinforced polyurethane/polyisocyanurate foam,

**characterized in that** the abovesaid mixture (12) of chemical components exhibits a dynamic viscosity $\eta$, during the impregnation stage b), such that an impregnation time of the fibers $t_i$ is less than the cream time $t_c$ of the polyurethane/polyisocyanurate foam, the impregnation time of the fibers $t_i$ being equal to:

$$t_i = (\eta \times e_m^2)/(K_c \times \Delta P),$$

$$\Delta P = (M_{sd} \times g_T \times k_p),$$

with

$\eta$ = the dynamic viscosity, expressed in pascal.seconds (Pa.s), $e_m$ = sum of the mean thicknesses of the fiber reinforcements (10), expressed in meters (m), each fiber reinforcement exhibiting a mean thickness corresponding to the mean of the distances between a plurality of pairs of local extremums of said fiber reinforcement (10) spaced out from one another along a direction of thickness of said fiber reinforcement,
$\Delta P$ = pressure gradient, expressed in pascals per meter (Pa),
$M_{sd}$ = surface density of the abovesaid mixture (12) of chemical components, expressed as weight per unit area (kg.m$^{-2}$),
$g_T$ = terrestrial gravitational force, regarded here as equal to 9.8 N.kg$^{-1}$,
$k_p$ = mean pressure factor, constant equal to 0.5.

2. The process as claimed in claim 1, in which the impregnation time $t_i$ observes the following formula with respect to the cream time $t_c$ of the polurethane/polyisocyanurate foam:

$$0.50 < {t_i}/{t_c} < 0.91$$

3. The process as claimed in claim 1 or 2, in which the expansion of the fiber-reinforced polyurethane/polyisocyanurate foam is physically constrained by the walls of a double belt laminator forming a tunnel, advantageously of rectangular section with a distance between the walls positioned laterally equal to L and a distance between the walls positioned horizontally equal to E, thus enclosing the expanding fiber-reinforced foam so as to obtain the abovesaid block of fiber-reinforced polyurethane/polyisocyanurate foam.

4. The process as claimed in claim 3, in which the positioning of the walls of the tunnel of the double belt laminator is defined so that the constraint on the expansion of the fiber-reinforced polyurethane/polyisocyanurate foam results in a volume of fiber-reinforced polyurethane/polyisocyanurate foam, at the outlet of the double belt laminator, representing between 85% and 99%, preferably between 90% and 99%, of the expansion volume of this same fiber-reinforced polyurethane/polyisocyanurate foam in the case of free expansion, without the constraint of the walls of such a double belt laminator.

5. The process as claimed in claim 1 or 2, in which the expansion of the fiber-reinforced polyurethane/polyisocyanurate foam is free, i.e. without the constraint exerted by a volume of closed section.

6. The process as claimed in claim 5, in which, following the stage of free expansion of the fiber-reinforced polyurethane/polyisocyanurate foam, said fiber-reinforced foam is cut in order to obtain the abovesaid block of fiber-reinforced polyurethane/polyisocyanurate foam.

7. The process as claimed in any one of the preceding claims, in which the dynamic viscosity $\eta$ of the abovesaid

mixture (12) of components is between 30 mPa.s and 3000 mPa.s, preferably between 50 mPa.s and 1500 mPa.s, under standard temperature and pressure conditions.

8. The process as claimed in any one of the preceding claims, in which at least 60% of the abovesaid cells storing a gas, advantageously having low thermal conductivity, exhibit a shape elongated or stretched along an axis parallel to the axis of a thickness E of the block of fiber-reinforced polyurethane/polyisocyanurate foam.

9. The process as claimed in any one of the preceding claims, in which at least 80%, preferably at least 90%, of the abovesaid cells storing a gas, advantageously having low thermal conductivity, exhibit a shape elongated or stretched along an axis parallel to the axis of a thickness E of the block of fiber-reinforced polyurethane/polyisocyanurate foam.

10. The process as claimed in any one of the preceding claims, in which the long to continuous fibers consist of glass fiber, of carbon fiber or any other organic or inorganic material, preferably of glass fiber.

11. The process as claimed in any one of the preceding claims, in which the fiber reinforcements (10) are positioned over an entire width L and stage b) of impregnation of the fibers by the mixture (12) of components, in order to obtain a fiber-reinforced polyurethane/polyisocyanurate foam, and of a blowing agent is carried out, via a controlled liquid dispenser (15), simultaneously over the entire width L.

12. The process as claimed in any one of the preceding claims, in which the blowing agent consists of a physical and/or chemical expanding agent, preferably a combination of the two types.

13. The process as claimed in claim 12, in which the physical expanding agent is chosen from alkanes and cycloalkanes having at least 4 carbon atoms, dialkyl ethers, esters, ketones, acetals, fluoroalkanes, fluoroolefins having between 1 and 8 carbon atoms and tetraalkylsilanes having between 1 and 3 carbon atoms in the alkyl chain, in particular tetramethylsilane, or a mixture of these.

14. The process as claimed in claim 12, in which the chemical expanding agent consists of water.

15. The process as claimed in claim 13, in which, during stage a) of mixing (12) chemical components, nucleating gas is incorporated in at least one polyol compound, preferably using a static/dynamic mixer under a pressure between 20 and 250 bar, the nucleating gas representing between 0% and 50% by volume of polyol, preferably between 0.05% and 20% by volume of the volume of polyol.

16. The process as claimed in any one of the preceding claims, in which, during stage a) of mixing (12) the chemical components, the temperature of each of the reactants for obtaining polyurethane/polyisocyanurate is between 10°C and 40°C, preferably between 15°C and 30°C.

17. The process as claimed in any one of the preceding claims, in which there is additionally added to the mixture, in stage a), an organophosphorus flame retardant, advantageously triethyl phosphate (TEP), tris(2-chloroisopropyl) phosphate (TCPP), tris(1,3-dichloroisopropyl) phosphate (TDCP), tris(2-chloroethyl) phosphate or tris(2,3-dibromopropyl) phosphate, or a mixture these, or an inorganic flame retardant, advantageously red phosphorus, expandable graphite, an aluminum oxide hydrate, an antimony trioxide, an arsenic oxide, an ammonium polyphosphate, a calcium sulfate or cyanuric acid derivatives, or a mixture of these.

18. The process as claimed in any one of the preceding claims, in which the content of fibers $C_f$ represents between 7% and 15% by weight of the block of fiber-reinforced foam.

19. A block of fiber-reinforced polyurethane/polyisocyanurate foam of a thermal insulation slab (30) of a sealed and thermally insulating tank, directly obtained by virtue of the process as claimed in any one of claims 1 to 18, the block of fiber-reinforced polyurethane/polyisocyanurate foam being composed of cells storing a gas, advantageously having low thermal conductivity, and exhibiting a density of less than 50 kg.m$^{-3}$ with a content of fibers $C_f$ representing at least 4% by weight of the block of fiber-reinforced foam,
**characterized in that** the fibers are distributed uniformly in the block of fiber-reinforced polyurethane/polyisocyanurate foam, in such a way that the content $C_f$ varies only by +/- 35%, preferably by +/- 20%, in all the zones or portions of said block of fiber-reinforced polyurethane/polyisocyanurate foam.

20. A sealed and thermally insulating tank, said consisting of:

- a tank integrated in a supporting structure comprising a sealed and thermally insulating tank comprising at least one sealed metal membrane composed of a plurality of metal strakes or metal plates which can comprise corrugations and a thermally insulating slab (30) comprising at least one thermally insulating barrier adjacent to said membrane, or
- a tank of type B or C according to the definition given by the IGC Code comprising at least one thermally insulating slab (30),

**characterized in that** the thermally insulating slab (30) comprises the block of fiber-reinforced polyurethane/polyisocyanurate foam as claimed in claim 19.

21. A ship (70) for the transportation of a cold liquid product, the ship comprising at least one hull (72) and a sealed and thermally insulating tank (71) as claimed in claim 20, positioned in the hull.

Imprégnation
par gravité

Expansion de
la mousse
PUR/PIR

Polymérisation et
Réticulation de la
mousse PUR/PIR

10

10

10

12

10

11

viscosité

température

Temps de crème(t$_c$)    Temps de gel

Fig. 1

16

17

17

18

18

19

19

15

18

Fig. 2

31

32

30

Fig. 3

Fig. 4

**RÉFÉRENCES CITÉES DANS LA DESCRIPTION**

**Documents brevets cités dans la description**

- FR 2882755

- KR 20000010021

**Littérature non-brevet citée dans la description**

- **R. POMEROY.** *Permeability characterisation of continuous filament mats for resin transfer moulding,* 2009

- Polyurethane. Kunststoffhandbuch. Imprimerie Carl Hanser, 1993, vol. 7